# EUROPÄISCHE PATENTSCHRIFT

(11) **EP 3 206 834 B1**
(45) Veröffentlichungstag und Bekanntmachung des Hinweises auf die Patenterteilung: **06.03.2019**
(21) Anmeldenummer: 15777609.7
(22) Anmeldetag: 07.10.2015
(51) Int. Cl.: B24B 13/005

(54) **VORRICHTUNG ZUM BLOCKEN VON WERKSTÜCKEN, INSBESONDERE BRILLENGLÄSERN, FÜR DEREN BEARBEITUNG UND/ODER BESCHICHTUNG**
DEVICE FOR BLOCKING OF WORKPIECES, ESPECIALLY SPECTACLE LENSES, FOR THEIR PROCESSING AND / OR COATING
DISPOSITIF DE BLOCAGE DE PIÈCES, NOTAMMENT DE LENTILLES DE LUNETTES, DE LEURS TRAITEMENT ET / OU REVÊTEMENT

(30) Priorität: 16.10.2014 DE 102014015200
(43) Veröffentlichungstag der Anmeldung: 23.08.2017
(73) Patentinhaber: Satisloh AG, 6340 Baar (CH)
(72) Erfinder: CORMIER, Alexandre, Dieppe, NB E1A 8G7 (CA); SCHÄFER, Holger, 35789 Weilmünster (DE); WALLENDORF, Steffen, 35582 Wetzlar-Dutenhofen (DE)
(74) Vertreter: Oppermann, Mark
(86) Internationale Anmeldenummer: PCT/EP2015/001969
(87) Internationale Veröffentlichungsnummer: WO 2016/058676

(56) Entgegenhaltungen:
- EP-A2- 0 082 322
- WO-A1-2009/135689
- WO-A2-03/018254
- DE-A1-102012 103 385
- US-A- 2 580 507
- US-A- 4 502 909
- US-A- 5 498 200
- US-A1- 2005 274 316

## Beschreibung

### TECHNISCHES GEBIET

Die vorliegende Erfindung bezieht sich allgemein auf eine Vorrichtung zum Blocken von Werkstücken für deren Bearbeitung und/oder Beschichtung, gemäß dem Oberbegriff des Patentanspruchs 1, wobei der resultierende sogenannte "Block" dazu dient, das Werkstück in der jeweiligen Bearbeitungsmaschine und/oder Beschichtungsanlage zu halten.

Insbesondere bezieht sich die Erfindung auf eine Vorrichtung zum Blocken von Brillengläsern - in dieser Branche auch kurz "Blocker" genannt - die in sogenannten "Rezept-" oder "RX-Werkstätten" massenweise zu blocken sind, bevor das jeweilige geblockte Brillenglas an seiner Rück- oder Frontfläche im Hinblick auf seine optische Wirkung (ggf. nach Rezept) und/oder am Rand zur Einpassung in ein zugeordnetes Brillengestell mit geometrisch bestimmter Schneide (Fräsen/Drehen) und/oder geometrisch unbestimmten Schneiden (Schleifen/Polieren) spanend bearbeitet und/oder auf seiner Rück- bzw. Frontfläche zur Erzielung zusätzlicher Wirkungen (Erhöhung der Kratzfestigkeit, Antireflexionseigenschaften, Verspiegelung, hydrophobe Eigenschaften, etc.) beschichtet wird.

Wenn nachfolgend im Zusammenhang mit der vorliegenden Erfindung als bevorzugtem Anwendungsgebiet allgemein von "Brillengläsern" die Rede ist, sind darunter optische Linsen bzw. Linsenrohlinge (Blanks) für Brillen aus den gebräuchlichen Materialien, wie Polycarbonat, Mineralglas, CR 39, HI-Index, etc. und mit beliebiger (Vor)Form des Umfangsrands der Linse bzw. des Linsenrohlings zu verstehen, die vor dem Blocken bereits an einer oder beiden optisch wirksamen Fläche(n) und/oder am Rand (vor)bearbeitet und/oder (vor)beschichtet sein können aber nicht müssen. Auch kann das Brillenglas auf seiner Fläche, an der es geblockt wird, mit einer Folie, einem Lack od.dgl. versehen sein, um diese Fläche vor Verunreinigung und Beschädigung zu schützen und/oder die Haftungseigenschaften zwischen Brillenglas und Blockmaterial zu verbessern, ohne dass dies im Folgenden jeweils eigens erwähnt wird.

### STAND DER TECHNIK

Aus der den Oberbegriff des Patentanspruchs 1 bildenden Druckschrift WO 03/018254 A2 ist eine Vorrichtung zum Blocken von Brillengläsern bekannt, die allgemein in einer Neben- bzw. Hintereinander-Anordnung eine Abbild/Ausrichtstation, eine Messstation und eine Blockstation umfasst, zwischen welchen die Brillengläser mittels eines Transportsystems mit einem Brillenglas-Aufnahmekopf automatisch transportiert werden können. Die Abbild/Ausrichtstation besitzt eine geometrisch definierte Brillenglasauflage, auf der ein aufgelegtes, zu blockendes Brillenglas manuell durch Drehen und/oder Verschieben wie gewünscht bzw. für das Rezept erforderlich ausgerichtet werden kann. In der Messstation kann das zu blockende, ausgerichtete Brillenglas an seiner einen Stirnfläche, an der es geblockt werden soll, mechanisch vermessen werden. Die Blockstation hingegen weist eine Blockstückaufnahme auf, in der ein Blockstück oder Blockring zentriert aufgenommen wird bevor das ausgerichtete Brillenglas mit der erwähnten Stirnfläche mittels eines temporär verformbaren Blockmaterials, dort einem lichtaushärtenden Klebstoff, auf dem Blockstück aufgeblockt wird.

Das Transportsystem ist dabei in der Lage, das in der Abbild/Ausrichtstation ausgerichtete Brillenglas vermittels des Brillenglas-Aufnahmekopfs an seiner anderen Stirnfläche zu fassen und zu halten, dann in eine definierte Position über die Messstation und später die Blockstation zu bringen (horizontale CNC-Linearachse) und an der jeweiligen Station das ausgerichtete Brillenglas definiert abzusenken (vertikale CNC-Linearachse), um es zu vermessen bzw. auf dem Blockstück aufzublocken. Eine Besonderheit besteht hierbei darin, dass das Brillenglas mittels des Transportsystems definiert, d.h. in beliebig vorwählbarer Höhe über dem Blockstück positioniert und während des Aufblockens in der definierten Relativlage zum Blockstück unter Belassung eines Blockmaterial-Aufnahmespalts zwischen Brillenglas und Blockstück gehalten werden kann (auch "spatial blocking" genannt).

Ein wesentlicher Vorteil dieses Vorgehens besteht darin, dass das Brillenglas in Relation zum Blockstück im Raum frei positioniert werden kann, beim Blocken also nie eine Zwangsausrichtung durch das Blockstück erfährt, wodurch auch die Genauigkeit beim Blocken des Brillenglases erhöht wird. Letzteres trifft namentlich für Gleitsichtgläser (sogenannte "PALs") zu, bei denen es sehr schwierig sein kann, diese richtig einzustellen, wenn man sie auf herkömmliche, kreisförmige Blockringe auflegt, weil die Gleitsichtkurve nicht sphärisch ist und das Brillenglas somit nicht vollständig bzw. wackelnd auf dem Blockring aufsitzt. Demgegenüber ist beim "spatial blocking" z.B. eine beliebige Winkelorientierung, Verkippung und/oder Verschiebung des Brillenglases gegenüber dem Blockstück für etwa ein prismatisches Blocken problemlos realisierbar. Auch die Dicke der Schicht an Blockmaterial bzw. Klebstoff zwischen Brillenglas und Blockstück ist beim "spatial blocking" prinzipiell frei wählbar, so dass beispielsweise die Gefahr gebannt werden kann, dass sich an bestimmten Stellen kein Blockmaterial zwischen Brillenglas und Blockstück befindet, weil das Blockmaterial dort nicht hingelangen konnte. Für die Bearbeitung des geblockten Brillenglases an Fläche und/oder Rand kann auf diese Weise stets eine vollflächige Abstützung und Haftung/Verklebung des Brillenglases gewährleistet werden. Ebenfalls lassen sich unerwünschte freie Spalte zwischen Brillenglas und Blockstück vermeiden, in welchen sich Flüssigkeit, ggf. in Folge von Kapillareffekten, sammeln könnte, was zu Problemen beim Beschichten führen kann (Ausgasen unter Vakuum), falls das Brillenglas im Fertigungsprozess durchgängig auf dem Blockstück verbleiben soll, wie etwa in der Druckschrift WO 2009/106296 A1 beschrieben.

In der Druckschrift WO 2009/135689 A1 wurde ferner vorgeschlagen, den gattungsbildenden Stand der Technik - auch im Sinne einer möglichst weitgehenden Automatisierung des Blockvorgangs für eine Fertigung von Brillengläsern in einem industriellen Maßstab - dahingehend weiterzubilden, dass das Transportsystem in der Lage ist, dass zu blockende Brillenglas nicht nur in zwei Richtungen, sondern vollständig im Raum zu positionieren, bevor es auf dem Blockstück aufgeblockt wird. Dies erfordert dort indes sechs CNC-Bewegungsachsen, nämlich drei im Wesentlichen senkrecht zueinander stehende CNC-Linearachsen und drei CNC-Dreh- bzw. Kippachsen um diese Linearachsen.

Solche CNC-Blocker - auch schon mit nur zwei CNC-Bewegungsachsen - stellen freilich eine erhebliche Investition dar, benötigen eine relativ große Stellfläche und sind für kleinere Rezept-Werkstätten, gemessen an deren Brillenglas-Durchsatz, schlichtweg überdimensioniert.

Natürlich wurden auch schon kleinere Blocker vorgeschlagen - siehe beispielsweise die Druckschrift DE 10 2012 103 385 A1 - die dementsprechend günstiger sind und auch nur eine im Verhältnis kleine Stellfläche benötigen. Bei diesem Stand der Technik werden die zu blockenden Brillengläser allerdings am Blockstück ausgerichtet, was die möglichen Relativstellungen von Brillenglas zu Blockstück erheblich beschränkt. Abhilfe würden hier formangepasste Blockstücke schaffen, dies indes mit einem erheblichen Aufwand im Hinblick auf Herstellung und Vorhaltung der verschiedenen Blockstücke. Ein echtes "spatial blocking" im obigen Sinne ist mit diesen vorbekannten Blockern nicht möglich.

### AUFGABENSTELLUNG

Demgemäß liegt der Erfindung ausgehend vom Stand der Technik gemäß der Druckschrift WO 03/018254 A2 die Aufgabe zugrunde, eine möglichst einfache, kostengünstige und kompakte Vorrichtung zum Blocken von Werkstücken, insbesondere von Brillengläsern, für deren Bearbeitung und/oder Beschichtung auch in kleineren Werkstätten zu schaffen, bei der das Werkstück hinsichtlich seiner Relativlage zum Blockstück keinen wesentlichen Beschränkungen unterliegt.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 15.

Erfindungsgemäß umfasst eine Vorrichtung zum Blocken von Werkstücken, insbesondere Brillengläsern, für deren Bearbeitung und/oder Beschichtung, eine eine Werkstückauflage aufweisende Ausrichtstation zum Ausrichten eines auf der Werkstückauflage aufgelegten Werkstücks, eine eine Blockstückaufnahme umfassende Blockstation, in der das ausgerichtete Werkstück mittels eines temporär verformbaren Blockmaterials auf einem Blockstück aufblockbar ist, welches in der Blockstückaufnahme bezüglich einer im Wesentlichen vertikal verlaufenden Blockerachse zentriert aufnehmbar ist, und einen einen Haltekopf für das Werkstück tragenden, geeignet geführten und angetriebenen Werkstückschlitten, mittels dessen das ausgerichtete, am Haltekopf gehaltene Werkstück von der Ausrichtstation zur Blockstation transportierbar, relativ zu dem sich in der Blockstückaufnahme befindenden Blockstück entlang der Blockerachse definiert positionierbar und während des Aufblockens in der definierten Relativlage zum Blockstück unter Belassung eines Blockmaterial-Aufnahmespalts zwischen Werkstück und Blockstück haltbar ist, wobei die Ausrichtstation von einer Ruheposition, in der sie Bewegungen des Werkstückschlittens nicht behindert, in eine Arbeitsposition bewegbar ist, in welcher die Werkstückauflage bezüglich der Blockerachse zentriert ist, und umgekehrt.

Mit anderen Worten gesagt besitzt die erfindungsgemäße Vorrichtung nur eine, im Wesentlichen vertikal verlaufende - und damit im Hinblick auf die unter Schwerkrafteinfluss erfolgende Aufbringung des temporär verformbaren Blockmaterials günstig ausgerichtete - Blockerachse, mit welcher die Blockstückaufnahme zur zentrierten Aufnahme der Blockstücke ausgefluchtet ist und entlang der das am Haltekopf gehaltene, zu blockende Werkstück sowohl von der Ausrichtstation zur Blockstation transportiert also auch über dem Blockstück in der Blockstückaufnahme positioniert werden kann. Das Werkstück muss nach dem Ausrichten - anders als im gattungsbildenden Stand der Technik - also nicht mehr, und schon gar nicht in präziser Weise, horizontal bewegt werden, um in eine klar definierte Horizontalposition über dem Blockstück zu gelangen.

Eine horizontale Bewegungsachse für das Werkstück und ggf. damit verbundene Positionierungsfehler entfallen gemäß der Erfindung somit gänzlich; mittels des Werkstückschlittens findet lediglich eine vertikale Positionierung des Werkstücks bezüglich des Blockstücks in der Blockstückaufnahme statt. Dies bewirkt auch einen - verglichen mit dem gattungsbildenden Stand der Technik - nur kleinen Stellflächenbedarf der Vorrichtung und begünstigt zudem einen dem gattungsbildenden Stand der Technik gegenüber einfacheren, kostengünstigeren Aufbau der Vorrichtung mit nur wenigen Komponenten. Eine Teilautomatisierung des Blockvorgangs ist bei diesem einfachen kinematischen Aufbau ebenfalls problemlos möglich.

Zugleich wird - anders als bei den "kleinen" Blockern gemäß dem obigen Stand der Technik - erfindungsgemäß jegliche Zwangsausrichtung des Werkstücks durch das Blockstück vermieden. Eine Auf- oder Anlage des Werkstücks auf/an dem Blockstück erfolgt weder beim Ausrichten des Werkstücks noch beim eigentlichen Blockvorgang, denn für das Ausrichten ist eine von der Blockstation verschiedene Ausrichtstation vorgesehen, und an der Blockstation gestattet der Werkstückschlitten ein beabstandetes Halten des am Haltekopf gehaltenen Werkstücks über dem Blockstück, womit ein "spatial blocking" problemlos möglich ist.

Als vertikale CNC-Linearachse ausgeführt ist es mit Werkstückschlitten und Haltekopf auf der Blockerachse außerdem möglich, ein den rheologischen Eigenschaften des Blockmaterials (Viskosität, Thixotropie oder Rheopexie) angepasstes Geschwindigkeitsprofil programmiert zu fahren, um den Anpressvorgang des Werkstücks in das Blockmaterial hinsichtlich erforderlicher Zeit und im Hinblick auf möglichst niedrige hierbei auf das Werkstück wirkende Kräfte zu optimieren. Als temporär verformbares Blockmaterial in Frage kommen dabei neben mittels Licht, insbesondere UV-Licht aushärtenden Klebstoffen grundsätzlich auch thermoplastische Haftmittel, die über handelsübliche temperaturgeregelte Dosiereinheiten für Schmelzkleber auf das jeweilige Blockstück aufgebracht werden können, welches hierauf in der Blockstückaufnahme ggf. geeignet gekühlt wird, oder auch andere Klebstoffe, etwa Reaktionsharzkleber (z.B. Zwei-Komponenten-Epoxydharz-Klebstoffe), bei Verwendung entsprechend geeigneter Dispenser.

Damit bei dem Transport und der Positionierung des am Haltekopf gehaltenen Werkstücks auf der Blockerachse die Ausrichtstation dem Werkstückschlitten bzw. dem davon getragenen Haltekopf nicht im Weg ist, kann die Ausrichtstation erfindungsgemäß aus der Blockerachse wegbewegt werden, was in sehr einfacher Weise durch beispielsweise eine ungesteuerte Linear- oder Schwenkbewegung der Ausrichtstation auf Endanschläge realisiert werden kann.

So ist in einer bevorzugten Ausgestaltung der Vorrichtung die Ausrichtstation an einem geeignet geführten Stationsschlitten angebracht, der quer zur Blockerachse bewegbar ist. Gegenüber einem ebenfalls denkbaren Wegschwenken oder -klappen der Ausrichtstation aus der Blockerachse hat eine Querbewegung zur Blockerachse den Vorteil, dass eine mit der Blockerachse exakt fluchtende Arbeitsposition der Ausrichtstation einfacher einzustellen ist.

Dabei kann der Stationsschlitten für die Ausrichtstation an im Wesentlichen horizontal verlaufenden Führungsstangen axial geführt und mittels eines Pneumatikzylinders auf Endanschläge bewegbar sein, die die Ruhe- und Arbeitspositionen definieren. Eine solche Ausgestaltung ist - verglichen mit ebenfalls möglichen Linearführungen mit Schienen und darauf laufenden Wagen - sehr kostengünstig. Außerdem sind Stangenführungen nicht schmutzanfällig und können einseitig gehalten werden. Die Verwendung eines Pneumatikzylinders für die Verschiebung des Stationsschlittens ermöglicht - gegenüber einer als Alternative denkbaren Betätigung des Stationsschlittens von Hand - mit einfachen Mitteln eine Automatisierung des eigentlichen Blockvorgangs nach dem Ausrichten des Werkstücks.

Um ein definiertes prismatisches Blocken mit einfachen und kostengünstigen Mitteln - insbesondere ohne spezielle CNC-Dreh- oder Kippachsen, wie im eingangs geschilderten Stand der Technik - zu ermöglichen, kann die Werkstückauflage durch einen wechselbar an der Ausrichtstation gehaltenen Prismenring einer Mehrzahl von verschieden abgeschrägten Prismenringen gebildet sein, der vermittels eines an der Ausrichtstation fest angebrachten Skalenrings um die Blockerachse im Drehwinkel orientiert werden kann.

Ferner kann in bevorzugter Ausgestaltung die Blockstückaufnahme zur formschlüssigen Aufnahme des Blockstücks ausgebildet und mittels eines Stellrings mit Skala in der Blockstation um die Blockerachse definiert verdrehbar sein, was wiederum mit sehr einfachen und kostengünstigen Mitteln eine exakte Drehwinkelorientierung des Blockstücks bezüglich der Blockerachse gestattet.

Im weiteren Verfolg des Erfindungsgedankens kann am Stationsschlitten auch eine Kamera montiert sein, mittels der über einen ebenfalls am Stationsschlitten angebrachten Umlenkspiegel das auf der Werkstückauflage der Ausrichtstation aufgelegte Werkstück entlang der Blockerachse filmbar ist, wenn sich die Ausrichtstation in ihrer Arbeitsposition befindet. Die Verwendung einer Kamera hat zunächst den Vorteil, dass eine von Parallaxenfehlern freie Ausrichtung des Werkstücks auf der Werkstückauflage möglich ist, weil die Kamera entlang der Blockerachse filmen kann. Besonders komfortabel ist die Ausrichtung dann mit einer PC-Unterstützung möglich, bei der dem Bild der Kamera eine per Computer generierte Ausrichtmarkierung überlagert und auf einem Bildschirm angezeigt wird. Prinzipiell wäre es zwar auch denkbar, eine solche Kamera separat in die Blockerachse zu bewegen oder zu schwenken. Eine Anordnung der Kamera mit einem Umlenkspiegel am Stationsschlitten ist demgegenüber aber besonders vorteilhaft, weil zum einen für die Bewegung der Kamera nicht eigens Maßnahmen getroffen werden müssen und zum anderen sich die relative Lage der Kamera bezüglich der Werkstückauflage nicht verändert, wenn die Ausrichtstation in die Blockerachse oder aus dieser heraus gefahren wird.

Vorzugsweise ist zum Bewegen und Positionieren des an im Wesentlichen vertikal verlaufenden Führungsstangen geführten Werkstückschlittens ein ortsfester Drehantrieb vorgesehen, der mit einem Kugelgewindetrieb antriebsverbunden ist, welcher eine drehbar gelagerte Kugelrollspindel aufweist, die mit einer drehfest mit dem Werkstückschlitten verbundenen Mutter eingreift. Prinzipiell wäre zwar auch die Verwendung anderer Linearführungen - wie etwa Schienen mit Wagen, od.dgl. - und anderer Antriebe - wie z.B. eines Linearmotors, eines Hohlwellen-Servomotors im Schlitten, od.dgl. - denkbar. Die obige bevorzugte Ausgestaltung von Führung und Antrieb ist demgegenüber aber preisgünstiger, bei hoher Steifigkeit und Unempfindlichkeit gegen Schmutz. Außerdem ist die bevorzugte Anordnung energetisch günstig, weil der Antrieb des Werkstückschlittens nicht gegen die Schwerkraft zu bewegen bzw. zu halten ist. Darüber hinaus kann durch geeignete Wahl der Steigung der Kugelrollspindel eine Selbsthemmung erzielt werden, so dass der Werkstückschlitten insbesondere während des Aufblockens quasi energielos über der Blockstation gehalten werden kann, ohne dass hierfür ein Gewichtsausgleich oder eine Bremse vorzusehen wäre.

In einer bevorzugten Ausgestaltung des Haltekopfs kann dieser mit einer Niederhalteeinrichtung für das auf der Werkstückauflage der Ausrichtstation aufgelegte Werkstück versehen sein, wobei die Niederhalteeinrichtung eine pneumatisch betätigbare Kolben-Zylinder-Anordnung mit einer in Richtung des Werkstücks ausfahrbaren Kolbenstange aufweist, welche mit der Blockerachse ausgefluchtet ist und endseitig ein Druckstück zum Angriff an dem Werkstück trägt. Eine solche Konstruktion baut vorteilhaft kompakt, ist sehr steif und sorgt, auch aufgrund ihrer zentralen Anordnung, in zuverlässiger Weise für eine temporäre kraftschlüssige Fixierung des einmal manuell ausgerichteten Werkstücks auf der Werkstückauflage, wobei die Andruckkraft mittels der pneumatisch betätigbaren Kolben-Zylinder-Anordnung feinfühlig dosiert aufgebracht werden kann. Außerdem kann das Werkstück mittels des zentral angeordneten Druckstücks vorteilhaft in der Werkstückmitte abgestützt werden, wenn es über den am Werkstückschlitten montierten Haltekopf in das temporär verformbare Blockmaterial gedrückt wird.

Grundsätzlich ist es denkbar, den Haltekopf für das Werkstück mit einem Mehrfingergreifer zum Halten des Werkstücks an dessen Rand auszustatten, wobei die einzelnen Finger eines solchen Greifers jedoch besonders ausgebildet und angetrieben werden müssten, um zu gewährleisten, dass sich ein auch bezüglich der Blockerachse einmal ausgerichtetes Werkstück beim Greifen und Halten nicht aus seiner ausgerichteten Lage wegbewegt. Demgegenüber bevorzugt, weil zur Erzielung des vorgenannten Effekts einfacher und kostengünstiger realisierbar, ist indes eine Ausgestaltung, bei der der Haltekopf eine Saugeinrichtung zum Halten des ausgerichteten Werkstücks vermittels Unterdruck aufweist, mit einer ringförmigen, die Blockerachse umgebenden Saugerlippe, die mit dem auf der Werkstückauflage der Ausrichtstation aufgelegten Werkstück in Anlage bringbar ist.

In bevorzugter Weiterbildung dieser Lösung kann die Saugerlippe bezüglich der Blockerachse über eine Kalottenlageranordnung verkippbar sein, die an einem Ende eines Saugerschafts angebracht ist, der im Haltekopf entlang der Blockerachse längsverschieblich gelagert, gleichwohl in jeder axialen Relativstellung zum Haltekopf festsetzbar ist. Somit kann sich die Saugerlippe problemlos auch an schräge Flächen beliebig dicker Werkstücke anlegen, ohne die Gefahr, dass es dabei zu einem Achsversatz des Werkstücks bezüglich der Blockerachse kommt.

In weiter bevorzugter Ausgestaltung kann der Haltekopf eine Gegenlageranordnung zum Abstützen des am Haltekopf gehaltenen Werkstücks in seiner ausgerichteten Lage aufweisen, wobei die Gegenlageranordnung wenigstens drei parallel zur Blockerachse verlaufende und um diese herum verteilt angeordnete Druckstifte hat, die bezüglich des Haltekopfs längsverschieblich sind, um jeweils mit einem vom Haltekopf vorstehenden Ende mit dem Werkstück in Anlage zu gelangen, und in ihrer jeweiligen axialen Relativstellung zum Haltekopf festsetzbar sind. Diese kostengünstige Konstruktion bewirkt in zuverlässiger Weise ein räumliches Fixieren der Lage des ausgerichteten Werkstücks bei dessen Transport von der Ausrichtstation zur Blockstation sowie an Letzterer ein räumlich definiertes Abstützen des Werkstücks während des Andruckvorgangs an das temporär verformbare Blockmaterial, bei dem somit auch verhältnismäßig große Andruckkräfte ausgeübt werden können.

Hierbei können in einer einfachen und kostengünstigen, gleichwohl sehr steifen Ausgestaltung der Gegenlageranordnung die Druckstifte in paralleler Anordnung mit einer Mehrzahl von Zylinderstiften in einem Ringraum des Haltekopfs aufgenommen sein, wobei zur axialen Festsetzung der Druckstifte ein Antrieb vorgesehen ist, mittels dessen ein Keil in einer Richtung quer zur Blockerachse zwischen benachbarte Zylinderstifte einschiebbar ist.

In einer insbesondere für einen (teil)automatisierten Blockvorgang zweckmäßigen Ausgestaltung kann in der Blockvorrichtung eine Dosiereinrichtung integriert sein, mittels der das Blockmaterial in einem verformbaren Zustand auf das in der Blockstückaufnahme aufgenommene Blockstück in definierter Menge aufbringbar ist, wobei die Dosiereinrichtung vorzugsweise zusammen mit der Ausrichtstation bewegbar ist, so dass zur Positionierung der Dosiereinrichtung über dem Blockstück vorteilhaft kein eigener Antrieb mit Führung vorgesehen werden muss.

Hierbei kann ein Dosierkopf der Dosiereinrichtung beweglich an dem Stationsschlitten für die Ausrichtstation gelagert sein, so dass er in Richtung des in der Blockstückaufnahme aufgenommenen Blockstücks und davon weg bewegbar ist, wobei in einer dem Blockstück nahen Position des Dosierkopfs das Blockmaterial zuführbar und die Zufuhr des Blockmaterials unter Wegbewegen des Dosierkopfs aus der dem Blockstück nahen Position in eine vom Blockstück entfernte Position beendbar ist. Diese (zusätzlich) gegenüber dem Stationsschlitten bewegbare Anordnung des Dosierkopfs der Dosiereinrichtung gestattet ein kontrolliertes Abreißen eines Blockmaterialtropfens, was - bedingt auch durch die ggf. hohe Viskosität eines flüssigen Blockmaterials - eventuell nicht möglich wäre, wenn nur der Stationsschlitten bei Beendigung der Blockmaterialzufuhr seitlich wegbewegt würde. Bei Nichtabreißen eines Blockmaterialtropfens aber würde dann die Blockstation durch "Verziehen" des flüssigen Blockmaterials seitlich über das Blockstück hinaus verschmutzt werden.

Schließlich kann die Blockstückaufnahme in einer bevorzugten Ausgestaltung, wenn mit lichtaushärtenden Klebstoffen als Blockmaterial gearbeitet werden soll, wenigstens teilweise transparent ausgebildet sein, wobei unterhalb der Blockstückaufnahme eine Belichtungseinrichtung auf der Blockerachse angeordnet ist, mittels der das Blockmaterial zum Aushärten belichtbar ist. In diesem Fall kann es sich bei der Belichtungseinrichtung um eine einfache UV-Lampe handeln. Den jeweiligen Belichtungserfordernissen entsprechend kann hier jedoch auch ein variabel ansteuerbares LED-Array als Beleuchtungsquelle zum Einsatz kommen, wie es in der älteren europäischen Patentanmeldung EP 14 189 085.5 der gleichen Anmelderin gezeigt und beschrieben ist. Für einen als Alternative möglichen Einsatz thermoplastischer Blockmaterialien kann die Belichtungseinrichtung natürlich entfallen. Gearbeitet werden würde dann mit einer beheizbaren Zuführung des thermoplastischen Blockmaterials und einer geeigneten Kühleinrichtung in/an der Blockstation, um ein rasches Verfestigen des Blockmaterials zu ermöglichen.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen und nicht maßstabsgetreuen Zeichnungen näher erläutert, in denen gleiche Bezugszeichen gleiche bzw. entsprechende Teile kennzeichnen. In den Zeichnungen zeigen:
- Fig. 1: eine perspektivische Ansicht einer erfindungsgemäßen Vorrichtung zum Blocken von Brillengläsern - nachfolgend kurz Blockvorrichtung genannt - von schräg oben / vorne rechts, wobei eine aufschwenkbare Haube für einen freien Blick auf dahinter verborgene, bei hochgeschwenkter Haube für den Bediener zugängliche, dann auf einer gemeinsamen vertikalen Blockerachse liegende Baugruppen (Blockstation unten, Ausrichtstation in der Mitte, Werkstück-Haltekopf oben) lediglich gestrichelt dargestellt ist;
- Fig. 2: eine perspektivische Ansicht der Blockvorrichtung gemäß Fig. 1 von schräg oben / vorne links, wobei zur Freigabe der Sicht auf wesentliche Bauteile bzw. Baugruppen der Blockvorrichtung und zur Vereinfachung der Darstellung gegenüber der Fig. 1 insbesondere der dort linke Elektro- und Pneumatik-Schaltschrank, sämtliche oberen Verkleidungsteile inklusive Haube bis auf eine Rückwand, die Versorgungs- bzw. Zufuhreinrichtungen (einschließlich Leitungen, Schläuche und Rohre) für Strom, Druckluft und Blockmaterial, sowie Mess-, Wartungs- und Sicherheitseinrichtungen weggelassen wurden;
- Fig. 3: eine perspektivische Ansicht der Blockvorrichtung gemäß Fig. 1 von schräg oben / hinten links, mit den Vereinfachungen von Fig. 2, wobei zusätzlich die Rückwand sowie Teile der Block- und Ausrichtstationen weggelassen wurden;
- Fig. 4: eine Längsschnittansicht des Haltekopfs der Blockvorrichtung gemäß Fig. 1, wobei die Schnittebene durch die vertikale Blockerachse hindurch verläuft;
- Fig. 5: eine in der Zeichnungsebene um 90° im Uhrzeigersinn gedrehte Schnittansicht des Haltekopfs der Blockvorrichtung gemäß Fig. 1 entsprechend der Schnittverlaufslinie V-V in Fig. 4;
- Fig. 6: bis Fig. 13 Längsschnittansichten der Blockvorrichtung gemäß Fig. 1 mit den Vereinfachungen von Fig. 2, wobei zusätzlich die Rückwand sowie ein Grundrahmen der Blockvorrichtung weggelassen wurden und der Haltekopf im nicht geschnittenen Zustand dargestellt ist, zur Illustration eines möglichen, teilautomatischen Blockprozesses in dessen zeitlichem Ablauf;
- Fig. 14: eine Draufsicht auf die Ausrichtstation der Blockvorrichtung gemäß Fig. 1, zur Veranschaulichung eines Ausrichtvorgangs bei einem Einstärken-Brillenglas, welches nicht prismatisch geblockt werden soll;
- Fig. 15: eine Schnittansicht der Ausrichtstation der Blockvorrichtung gemäß Fig. 1 entsprechend der Schnittverlaufslinie XV-XV in Fig. 14;
- Fig. 16: eine Draufsicht auf die Ausrichtstation der Blockvorrichtung gemäß Fig. 1, zur Veranschaulichung eines Ausrichtvorgangs bei einem Einstärken-Brillenglas, welches prismatisch geblockt werden soll;
- Fig. 17: eine Schnittansicht der Ausrichtstation der Blockvorrichtung gemäß Fig. 1 entsprechend der Schnittverlaufslinie XVII-XVII in Fig. 16;
- Fig. 18: eine Skizze zu einem Ausrichtvorgang bei einem zu blockenden Gleitsicht-Brillenglas unter Verwendung computergenerierter Ausrichthilfen und eines Kamerabilds auf einem Computer-Bildschirm, wobei das Gleitsicht-Brillenglas noch nicht ausgerichtet ist;
- Fig. 19: eine der Fig. 18 entsprechende Skizze zu dem Ausrichtvorgang bei dem zu blockenden Gleitsicht-Brillenglas, diesmal mit korrekt ausgerichtetem Gleitsicht-Brillenglas;
- Fig. 20: eine perspektivische Ansicht einer Ausrichtstation der Blockvorrichtung gemäß Fig. 1 in einer gegenüber der Ausgestaltung gemäß den Fig. 14 bis 17 alternativen Ausgestaltung, bei der anstelle eines Prismenrings an einem Skalenring drei Auflagestifte vorgesehen sind, deren Länge für ein nicht prismatisches Blocken gleich ist;
- Fig. 21: eine perspektivische Ansicht der Ausrichtstation gemäß Fig. 20, bei der die drei Auflagestifte für ein prismatisches Blocken verschieden lang sind; und
- Fig. 22: eine Schnittansicht der Ausrichtstation gemäß Figur 21, bei der der Schnitt durch eine Mittelachse des Skalenrings und den längsten Auflagestift verläuft und die einen Ausrichtvorgang bei einem Einstärken-Brillenglas veranschaulicht, welches prismatisch geblockt werden soll.

### DETAILLIERTE BESCHREIBUNG DES AUSFÜHRUNGSBEISPIELS

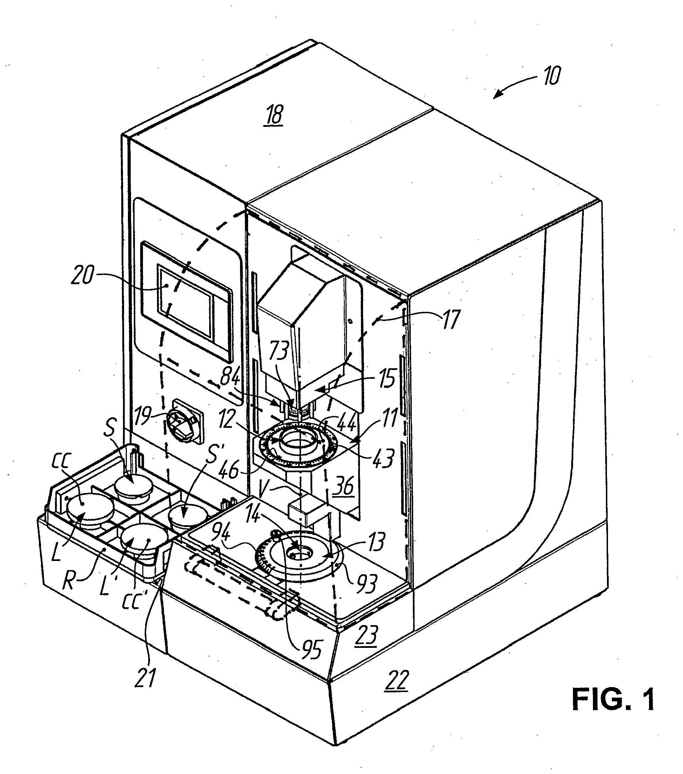

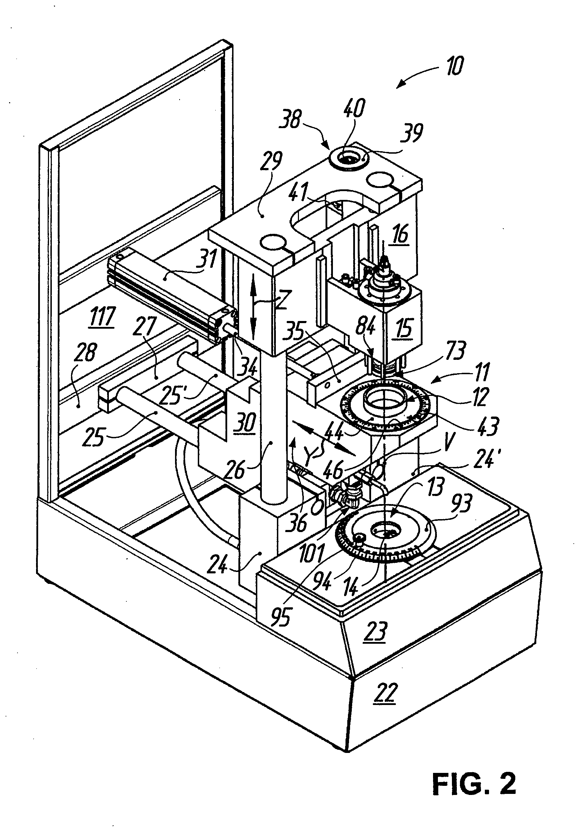

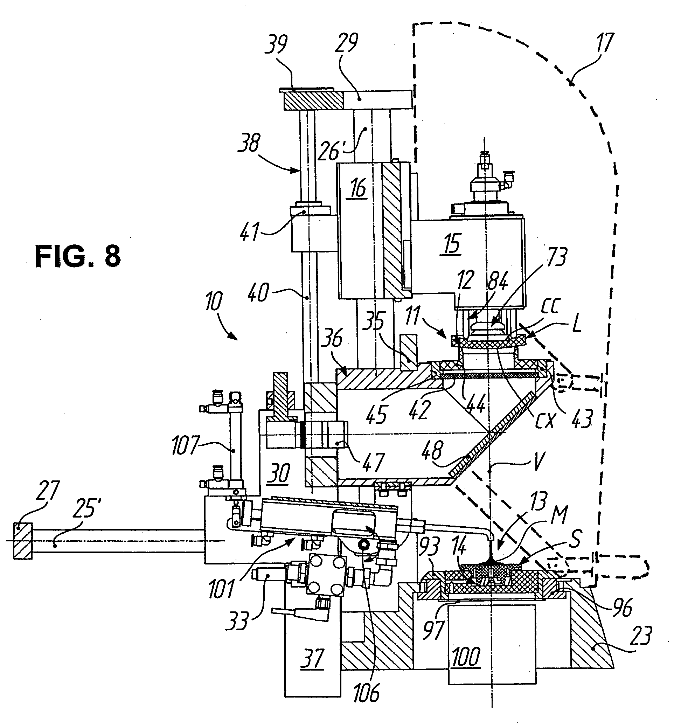

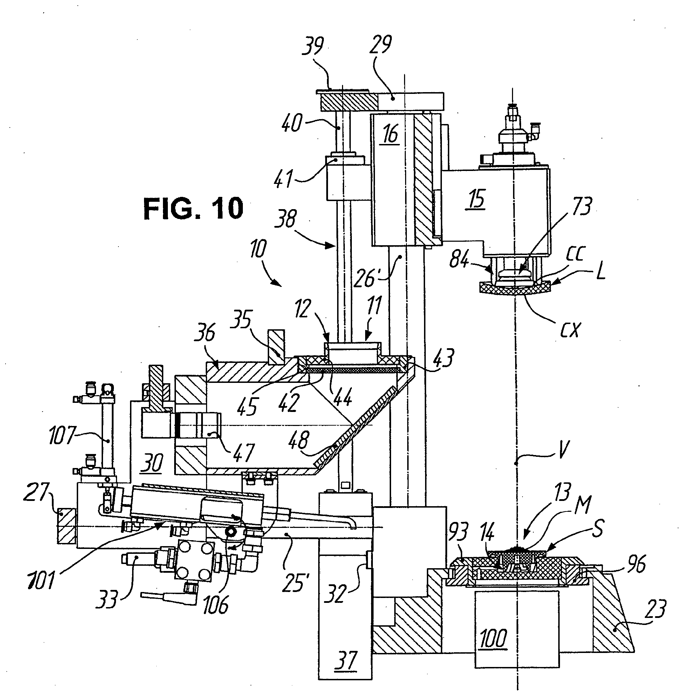

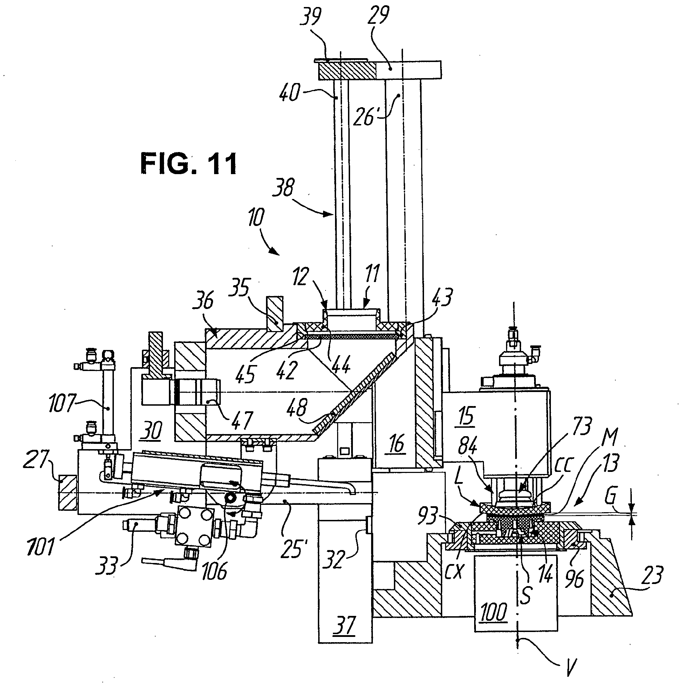

In den Fig. 1 bis 3 und 6 bis 13 beziffert das Bezugszeichen 10 eine Blockvorrichtung für Brillengläser L. Wie nachfolgend noch ausführlich beschrieben wird, umfasst die Blockvorrichtung 10 allgemein (a) eine Ausrichtstation 11 mit einer Werkstückauflage 12 zum Ausrichten eines auf der Werkstückauflage 12 aufgelegten Brillenglases L, (b) eine Blockstation 13 mit einer Blockstückaufnahme 14, in der das ausgerichtete Brillenglas L mittels eines temporär verformbaren Blockmaterials M (vgl. die Fig. 8 bis 13) auf einem in der Blockstückaufnahme 14 bezüglich einer im Wesentlichen vertikal verlaufenden Blockerachse V (siehe die Fig. 1, 2 und 6 bis 13) zentriert aufgenommenen Blockstück S aufgeblockt werden kann, und (c) einen einen Haltekopf 15 für das Brillenglas L tragenden, geeignet geführten und angetriebenen Werkstückschlitten 16 (vgl. die Fig. 2, 3 und 6 bis 13) mittels dessen das ausgerichtete, am Haltekopf 15 gehaltene Brillenglas L von der Ausrichtstation 11 zur Blockstation 13 transportiert, relativ zu dem sich in der Blockstückaufnahme 14 befindenden Blockstück S entlang der Blockerachse V definiert positioniert und während des Aufblockens in der definierten Relativlage zum Blockstück S unter Belassung eines Blockmaterial-Aufnahmespalts G (vgl. Fig. 11) zwischen Brillenglas L und Blockstück S gehalten werden kann. Als weitere Besonderheit kann die Ausrichtstation 11 von einer Ruheposition (Fig. 10 bis 12), in der sie Bewegungen des Werkstückschlittens 16 insbesondere entlang der Blockerachse V nicht behindert, in eine Arbeitsposition (Fig. 1 bis 3, 6 bis 9 und 13) bewegt werden, in welcher die Werkstückauflage 12 bezüglich der Blockerachse V zentriert ist, und umgekehrt, wie noch im Detail erläutert wird.

Gemäß Fig. 1 sitzt neben den vorerwähnten mechanischen Komponenten der Blockvorrichtung 10, die in ihrer Arbeitsposition mittels einer hier nur gestrichelt angedeuteten, von Hand aufschwenkbaren Haube 17 abgedeckt werden können, ein Elektro- und Pneumatik-Schaltschrank 18 mit PC zur elektrischen bzw. pneumatischen Steuerung der Blockvorrichtung 10 und für die Bereitstellung der Arbeitsmedien und Betriebsstoffe. An seiner Frontseite ist der Elektro- und Pneumatik-Schaltschrank 18 mit einem Hauptschalter 19 und einem Touchscreen 20 für die Bedienung und einen ggf. computerunterstützten Ausrichtvorgang versehen. Davor ist eine Ablagefläche 21 vorgesehen, auf der ein in der Brillenglasfertigung üblicher Rezeptkasten R - hier mit zwei Brillengläsern L, L' eines Brillenglaspaars und zwei Blockstücken S, S' bestückt gezeigt, auf die die Brillengläser L, L' aufgeblockt werden sollen - abgestellt werden kann.

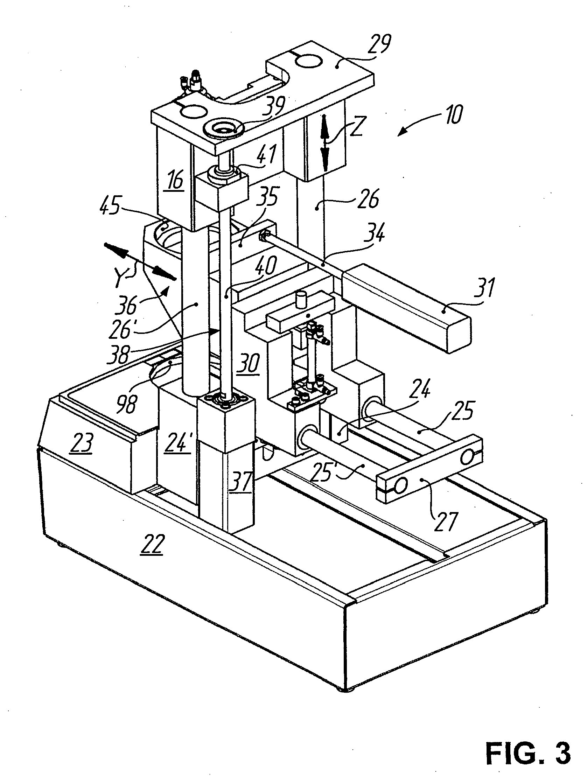

Was weiter den mechanischen Aufbau der Blockvorrichtung 10 angeht, ist am besten in den Fig. 2 und 3 zu erkennen, das an einem Grundrahmen 22 eine Basis 23 angebracht ist, welche an ihrer Rückseite zwei Lagerblöcke 24, 24' aufweist. An den Lagerblöcken 24, 24' sind zwei parallele Führungsstangen 25, 25' einer horizontalen Stangenführung, die sich von den Lagerblöcken 24, 24' im Wesentlichen horizontal nach hinten weg erstrecken, und zwei parallele Führungsstangen 26, 26' einer vertikalen Stangenführung, welche sich von den Lagerblöcken 24, 24' im Wesentlichen vertikal nach oben weg erstrecken, befestigt. Die Führungsstangen 25, 25' der horizontalen Stangenführung sind an ihren von den Lagerblöcken 24, 24' abgewandten Enden über eine Platte 27 miteinander verbunden, die ihrerseits über ein U-Profil 28 an einer auf dem Grundrahmen 22 stehenden Rückwand 117 befestigt ist. Auch die Führungsstangen 26, 26' der vertikalen Stangenführung sind an ihren von den Lagerblöcken 24, 24' abgewandten oberen Enden mittels einer Platte 29 miteinander verbunden.

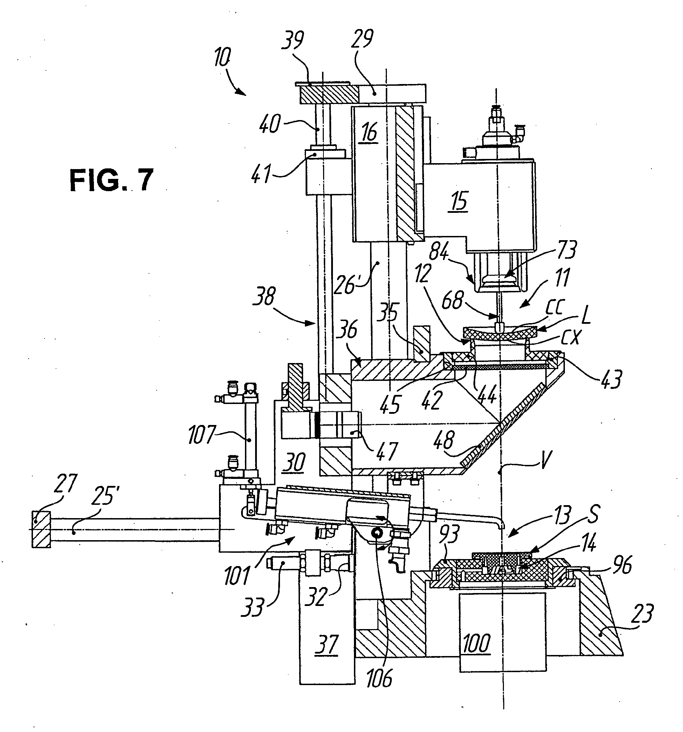

An den im Wesentlichen horizontal verlaufenden Führungsstangen 25, 25' ist über in den Figuren nicht gezeigte Axiallagerelemente ein Stationsschlitten 30 axial geführt, an dem die Ausrichtstation 11 angebracht ist. Der Stationsschlitten 30 ist mittels eines Pneumatikzylinders 31 (vgl. die Fig. 2 und 3) entlang einer im Wesentlichen horizontalen Verfahrachse Y quer zur Blockerachse V auf Endanschläge bewegbar, die die Ruhe- und Arbeitspositionen der Ausrichtstation 11 definieren. Dabei ist der Endanschlag in der Ruheposition (Fig. 10 bis 12) auf an sich bekannte, hier indes nicht gezeigte Weise an bzw. in dem Pneumatikzylinder 31 ausgebildet. Der Endanschlag in der Arbeitsposition (Fig. 1 bis 3, 6 bis 9 und 13) dagegen ist durch eine Anschlagfläche 32 an der Basis 23 gebildet, mit der ein am Stationsschlitten 30 befestigter, einstellbarer Stoßdämpfer 33 zusammenwirkt, wie am besten in der an dieser Stelle aufgebrochenen Darstellung gemäß Fig. 7 zu erkennen ist. Zur Bewegungsübertragung vom Pneumatikzylinder 31 auf den Stationsschlitten 30 greift eine Kolbenstange 34 des Pneumatikzylinders 31 über einen Mitnehmer 35 an einem Stationsgehäuse 36 an, welches am Stationsschlitten 30 befestigt ist.

An den im Wesentlichen vertikal verlaufenden Führungsstangen 26, 26' hingegen ist über in den Figuren nicht dargestellte Axiallagerelemente der den Haltekopf 15 tragende Werkstückschlitten 16 axial geführt. Zum Bewegen und Positionieren des so geführten Werkstückschlittens 16 entlang einer Linearachse Z ist ein ortsfest an dem Lagerblock 24' angebrachter Drehantrieb 37 (vgl. insbesondere die Fig. 3 und 10 bis 12), wie z.B. ein Schrittmotor, vorgesehen, der mit einem Kugelgewindetrieb 38 antriebsverbunden ist. Der Kugelgewindetrieb 38 weist eine drehbar am Drehantrieb 37 und bei 39 an der Platte 29 gelagerte Kugelrollspindel 40 auf, die mit einer drehfest mit dem Werkstückschlitten 16 verbundenen Mutter 41 eingreift. Die so aufgebaute Linearachse Z ist CNC-lagegeregelt; zur Vereinfachung der Darstellung ist das zugehörige Wegmesssystem jedoch nicht gezeigt.

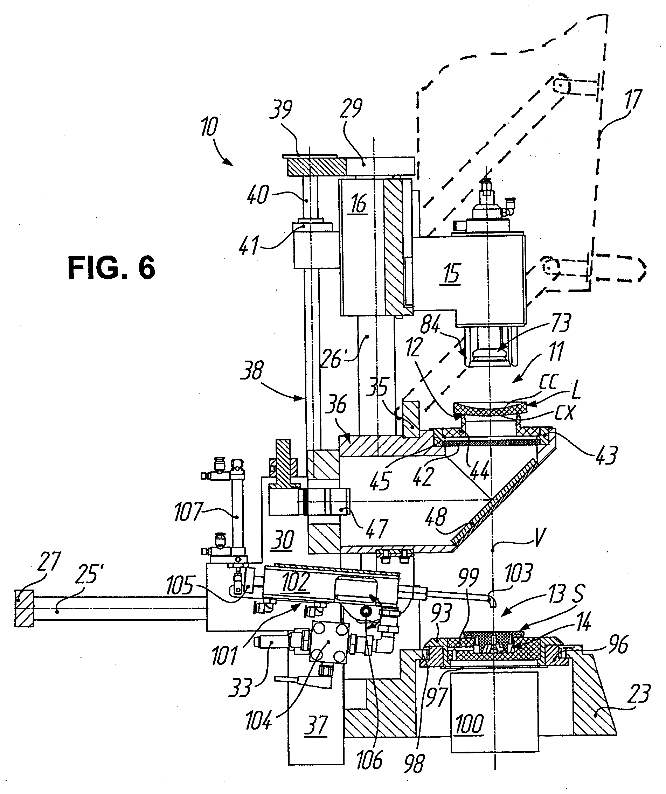

Weitere Details zum Aufbau und zur Funktion der Ausrichtstation 11 sind insbesondere den Fig. 6 bis 19 zu entnehmen. Demgemäß umfasst die Ausrichtstation 11 von in den Fig. 6 bis 13 unten nach oben gesehen eine Schutzscheibe 42, einen Skalenring 43 und einen darin von oben einsetzbaren Prismenring 44, welche sämtlich zentriert in einer kreisrunden, gestuften Öffnung 45 des Stationsgehäuses 36 sitzen, die ihrerseits mit der Blockerachse V ausgefluchtet ist, wenn sich die Ausrichtstation 11 in ihrer Arbeitsposition befindet.

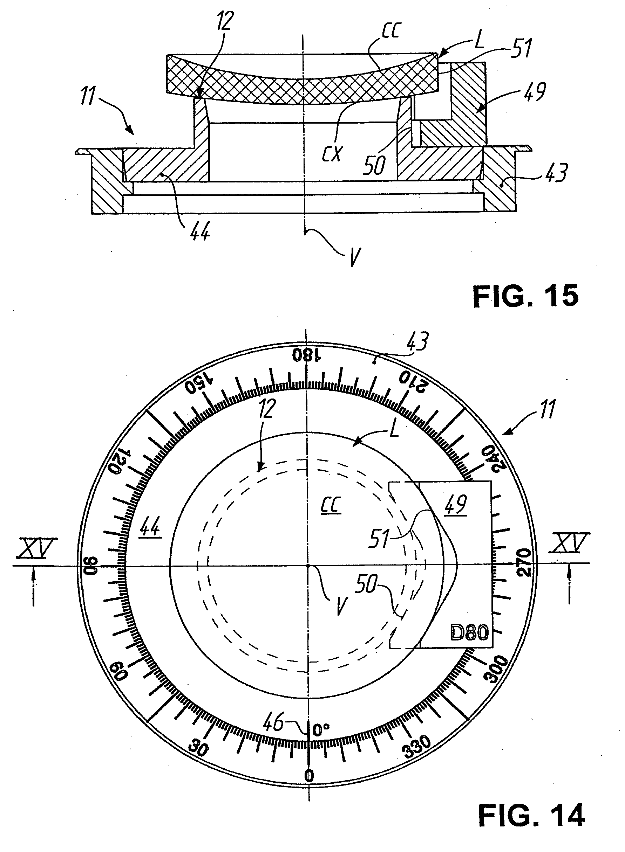

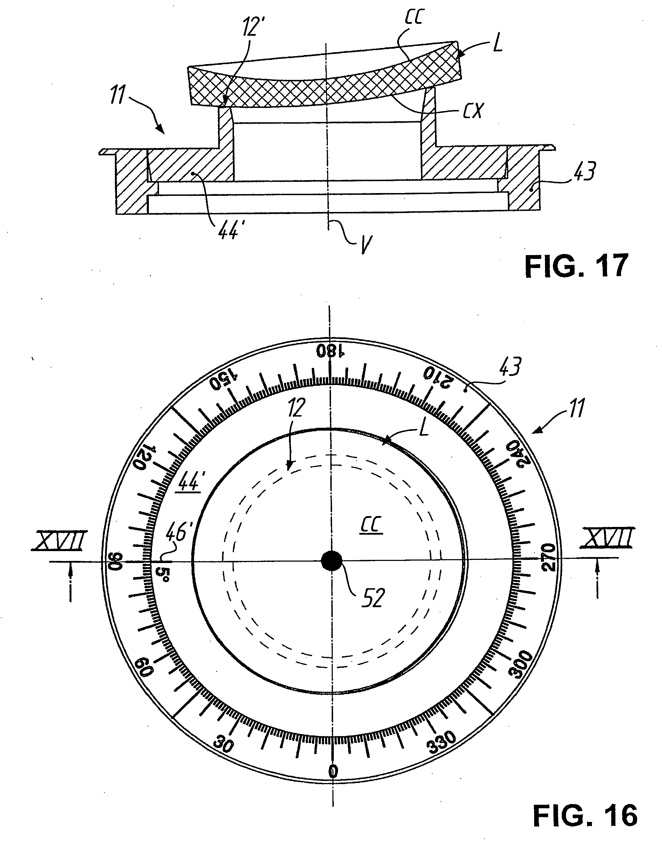

Dabei wird die ringförmige Werkstückauflage 12 durch den Prismenring 44 gebildet, der auswechselbar an der Ausrichtstation 11 gehalten ist, so dass den jeweiligen Blockerfordernissen entsprechend verschieden abgeschrägte Prismenringe 44 in den Skalenring 43 eingesetzt werden können. Dies ist exemplarisch in den Fig. 15 und 17 gezeigt: Während die Werkstückauflage 12 am Prismenring 44 von Fig. 15 bezüglich der Blockerachse V nicht abgeschrägt ist (Prismenwinkel von 0°), ist die Werkstückauflage 12' am Prismenring 44' gemäß Fig. 17 bezüglich der Blockerachse V abgeschrägt bzw. schräggestellt (hier um einen Prismenwinkel von 5°). Es kann hier eine Mehrzahl von verschieden abgeschrägten Prismenringen 44, 44', die z.B. gradweise (0°, 1°, 2°, 3°, etc.) gestuft sind, vorgehalten werden, um den gewünschten Bereich an Prismenwinkeln beim Blocken abzudecken.

Während der Skalenring 43 an der Ausrichtstation 11 fest angebracht ist, lässt sich der jeweils eingesetzte Prismenring 44, 44' im Skalenring 43 um die Blockerachse V verdrehen. Dabei ermöglicht eine Markierung 46 bzw. 46' an dem entsprechenden Prismenring 44, 44' im Zusammenspiel mit dem Skalenring 43 eine definierte Drehwinkelorientierung des Prismenrings 44, 44' um die Blockerachse V.

Wie des Weiteren in den Fig. 6 bis 13 gezeigt ist, ist am Stationsschlitten 30 eine Kamera 47 montiert. Mit der Kamera 47 kann vermittels eines über das Stationsgehäuse 36 ebenfalls am Stationsschlitten 30 angebrachten Umlenkspiegels 48, der im Stationsgehäuse 36 in der Art eines Spiegelkastens montiert ist, das auf der Werkstückauflage 12 der Ausrichtstation 11 aufgelegte Brillenglas L entlang der Blockerachse V gefilmt werden, wenn sich die Ausrichtstation 11 in ihrer Arbeitsposition befindet.

Mit diesem Aufbau kann das zu blockende Brillenglas L in der Ausrichtstation 11 auf der Werkstückauflage 12 definiert ausgerichtet werden, wie in den Fig. 14 bis 19 illustriert ist. Die Fig. 14 und 15 zeigen hierbei den einfachsten Fall eines Einstärken-Brillenglases L, welches ohne Prisma geblockt werden soll. In diesem Fall ist ein Ausrichten mittels einer Zentrierhilfe 49 möglich, die dem Durchmesser des Brillenglases L (hier z.B. 80 mm) und dem Durchmesser des Prismenrings 44 im Bereich der Werkstückauflage 12 angepasst ist. Hierbei kann die Zentrierhilfe 49 mit einer in Fig. 15 unteren Stufe 50 am vorkragenden Umfang des Prismenrings 44 angelegt werden, der an dieser Stelle einen definierten Durchmesser besitzt, worauf das in der Draufsicht gesehen kreisrunde Brillenglas L mit seinem Rand an einer in Fig. 15 oberen Stufe 51 der Zentrierhilfe 49 angelegt wird, der von der unteren Stufe 50 definiert radial beanstandet ist. Es ist ersichtlich, dass somit auf denkbar einfache Weise eine Zentrierung des Brillenglases L bezüglich der Blockerachse V möglich ist.

Die Fig. 16 und 17 zeigen den Fall eines Einstärken-Brillenglases L, welches mit einem Prismenwinkel von 5° geblockt werden soll. Das Brillenglas L wurde hierfür mit einem Punkt 52 markiert, der dem geometrischen Zentrum des Brillenglases L entspricht. Bei diesem Ausrichtvorgang kann das auf der Werkstückauflage 12' des am Skalenring 43 definiert drehwinkelorientierten Prismenrings 44' aufgelegte Brillenglas L mittels der Kamera 47 über den Umlenkspiegel 48 von unten durch den Prismenring 44' hindurch gefilmt werden, was auf dem Touchscreen 20 der Blockvorrichtung 10 angezeigt werden kann, auf dem zugleich ein computergeneriertes Fadenkreuz zu sehen ist, dessen Schnittpunkt der Blockerachse V entspricht. Der Bediener hat nun lediglich den gefilmten Punkt 52 des Brillenglases L durch Verschieben des Brillenglases L auf der Werkstückauflage 12 von Hand am Fadenkreuz auszurichten.

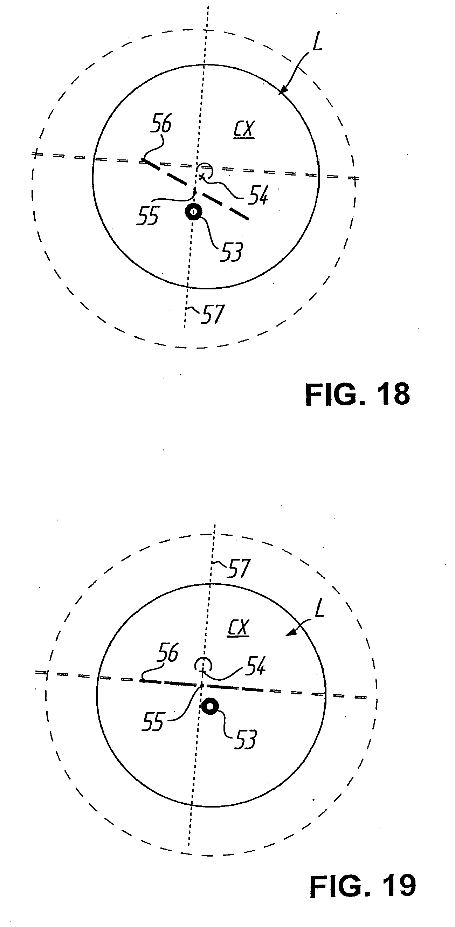

Die Fig. 18 und 19 illustrieren den Fall eines Gleitsicht-Brillenglases L, welches üblicherweise vor dem Aufblocken und der Bearbeitung mit den dargestellten Stempelmarkierungen versehen ist, die den Nahpunkt 53, den Fernpunkt 54, den Prismenreferenzpunkt 55 und die Glashorizontale 56 repräsentieren. Mit diesen Markierungen lässt sich das von unten gefilmte Brillenglas L analog den Ausführungen zu den Fig. 16 und 17 manuell an dem entsprechend der tatsächlichen Lage des Prismenrings 44 computergenerierten Fadenkreuz 57 ausrichten, um von einer unausgerichteten Lage (Fig. 18) in eine ausgerichtete Lage (Fig. 19) zu gelangen.

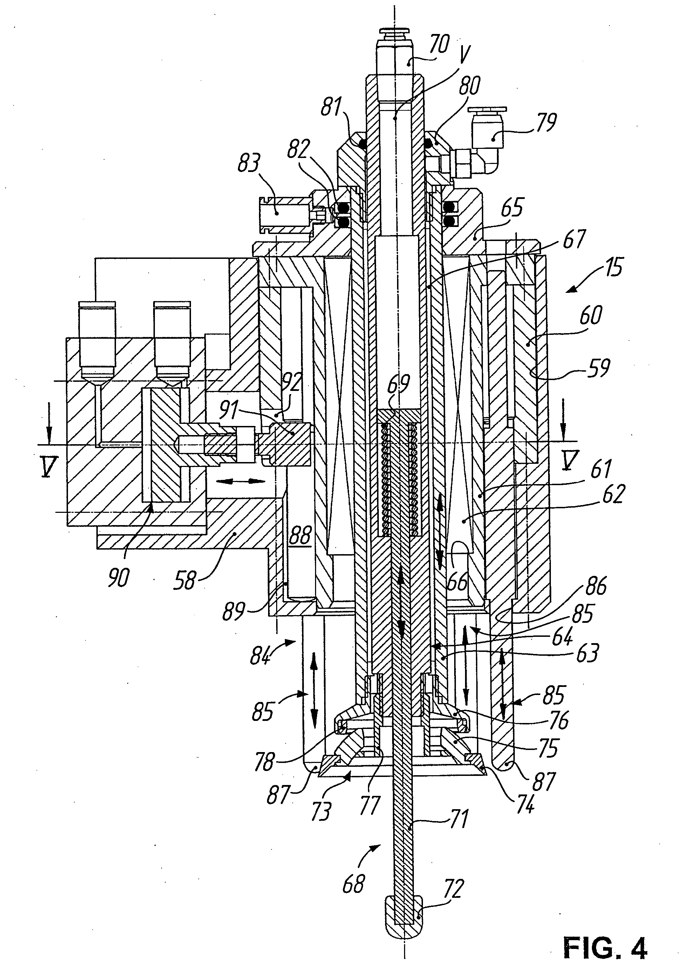

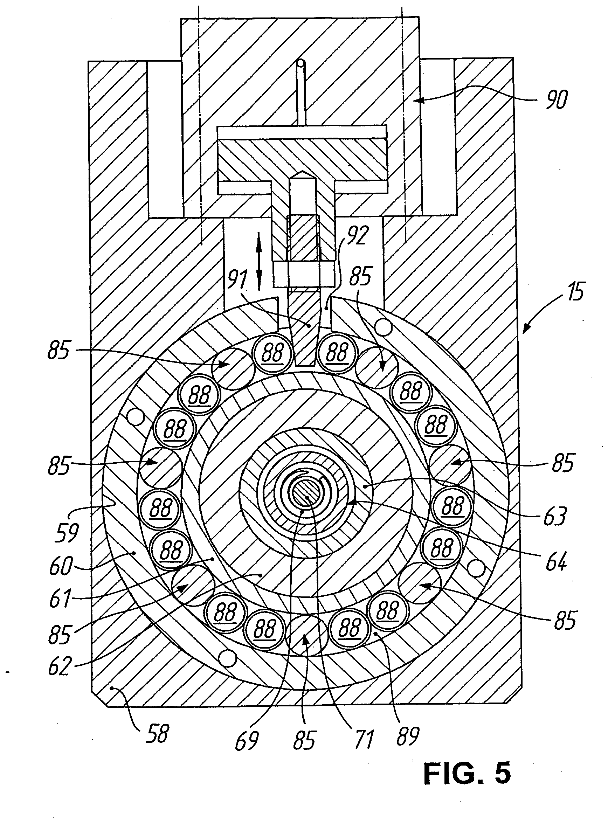

Zur Erläuterung weiterer Details des Haltekopfs 15 sei nunmehr auf die Fig. 4 und 5 Bezug genommen. Der Haltekopf 15 besitzt zunächst ein an definierter Position des Werkstückschlittens 16 angeflanschtes Gehäuse 58 mit einer gestuften Durchgangsbohrung 59, die im angeflanschten Zustand des Gehäuses 58 mit der Blockerachse V ausgefluchtet ist. In der Durchgangsbohrung 59 des Gehäuses 58 sind in bezüglich der Blockerachse V zentrierter Anordnung von radial außen zur Blockerachse V hin gesehen eine Zylinderhülse 60, eine Lagerhülse 61, eine Kugelbuchse 62, ein Saugerschaft 63 sowie an zentraler Stelle eine Kolben-Zylinder-Anordnung 64 aufgenommen. Wie in Fig. 4 mit strichpunktierten Linien angedeutet ist die Zylinderhülse 60 mit dem Gehäuse 58 fest verschraubt. Die Lagerhülse 61 hingegen ist über einen angeformten Flansch mit der Zylinderhülse 60 fest verschraubt. Ein an der Lagerhülse 61 angeschraubter Klemmflansch 65 hält die Kugelbuchse 62 in axialer Richtung auf einer radial inneren Stufe 66 der Lagerhülse 61. Der Saugerschaft 63 ist in der Kugelbuchse 62 längsverschieblich aufgenommen, während schließlich die Kolben-Zylinder-Anordnung 64 unter Belassung eines Ringspalts 67 zwischen Saugerschaft 63 und Kolben-Zylinder-Anordnung 64 im Saugerschaft 63 befestigt ist.

Die Kolben-Zylinder-Anordnung 64 ist hierbei Bestandteil einer im Haltekopf 15 integrierten Niederhalteeinrichtung 68 für das auf der Werkstückauflage 12 der Ausrichtstation 11 aufgelegte Brillenglas L. Hierbei kann die Kolben-Zylinder-Anordnung 64 gegen die Kraft einer Druckfeder 69 über einen Druckanschluss 70 pneumatisch beaufschlagt werden, um eine Kolbenstange 71 in Richtung des Brillenglases L auszufahren. Die Kolbenstange 71 ist mit der Blockerachse V ausgefluchtet und trägt endseitig ein Druckstück 72 aus einem elastischen Material zum Angriff an dem Brillenglas L.

Der Saugerschaft 63 hingegen ist Bestandteil einer ebenfalls im Haltekopf 15 integrierten Saugeinrichtung 73 zum Halten des ausgerichteten Brillenglases L vermittels Unterdruck. Die Saugeinrichtung 73 hat eine ringförmige, die Blockerachse V umgebende elastische Saugerlippe 74, die mit dem auf der Werkstückauflage 12 der Ausrichtstation 11 aufgelegten Brillenglas L in Anlage gebracht werden kann. Hierbei ist die an einer Kalotte 75 befestigte Saugerlippe 74 bezüglich der Blockerachse V in einer Kalottenaufnahme 76 verkippbar, die am Saugerschaft 63 angebracht ist, wobei die Kalotte 75 mittels eines Kalottenhalters 77 am in Fig. 4 unteren Ende der Kolben-Zylinder-Anordnung 64 gehalten ist. Ein zwischen der Kalotte 75 und der Kalottenaufnahme 76 aufgenommener Dichtring 78 ("Step-Seal-Ring") dichtet hier selbst bei einer Relativverkippung zuverlässig ab. Über einen weiteren Druckanschluss 79 an einem oberen Flanschteil 80 und den erwähnten Ringspalt 67 kann ein Unterdruck an die Saugeinrichtung 73 angelegt werden, wobei ein zwischen einem oberen Ende der Kolben-Zylinder-Anordnung 64 und dem Flanschteil 80 eingesetzter O-Ring 81 zur Umgebung hin abdichtet.

Obgleich im dargestellten Ausführungsbeispiel das Axiallager für den Saugerschaft 63 durch die Kugelbuchse 62 zwischen der Lagerhülse 61 und dem Saugerschaft 63 ausgebildet ist, kann die Kugelbuchse 62 auch entfallen, wenn die Werkstoffe von Lagerhülse 61 und Saugerschaft 63 so geeignet aufeinander abgestimmt sind, dass der Saugerschaft 63 direkt in der Lagerhülse 61 gleitgelagert werden kann. Ein wesentlicher Vorteil einer solchen Anordnung bestünde insbesondere in ihrem geringen radialen Bauraumbedarf.

Wie bereits angedeutet ist der Saugerschaft 63 vermittels der Kugelbuchse 62 im Haltekopf 15 entlang der Blockerachse V längsverschieblich gelagert; gleichwohl ist der Saugerschaft 63 in jeder axialen Relativstellung zum Haltekopf 15 festsetzbar. Dafür sind in Ringnuten im Klemmflansch 65 O-Ringe 82 eingesetzt, die bei Druckbeaufschlagung über einen Druckanschluss 83 gegen die Außenumfangsfläche des Saugerschafts 63 gedrückt werden können. Auch für die axiale Festsetzung des Saugerschafts 63 im Haltekopf 15 sind Alternativen denkbar: So kann anstelle der zwei O-Ringe 82 ein z.B. 3D-gedrucktes, ringförmiges Membranteil in einer innenumfangsseitigen Ringnut des Klemmflanschs 65 aufgenommen sein, welches in der Art eines Reifenschlauchs aufblasbar ist, um den Saugerschaft 63 an dessen Außenumfangsfläche zu klemmen.

Darüber hinaus weist der Haltekopf 15 als dritte Funktionseinheit eine Gegenlageranordnung 84 zum Abstützen des am Haltekopf 15 gehaltenen Brillenglases L in seiner ausgerichteten Lage auf. Die Gegenlageranordnung 84 hat wenigstens drei, im dargestellten Ausführungsbeispiel sieben parallel zur Blockerachse V verlaufende und um diese herum verteilt angeordnete Druckstifte 85 (siehe wiederum die Fig. 4 und 5), die bezüglich des Haltekopfs 15 längsverschieblich sind, um jeweils mit einem vom Haltekopf 15 durch eine zugeordnete Bohrung 86 im Gehäuse 58 vorstehenden Ende 87 mit dem Brillenglas L in Anlage zu gelangen. Ferner sind die Druckstifte 85 in ihrer jeweiligen axialen Relativstellung zum Haltekopf 15 festsetzbar. Hierfür sind die Druckstifte 85 in paralleler Anordnung mit einer Mehrzahl von Zylinderstiften 88 in einem zwischen der Zylinderhülse 60 und der Lagerhülse 61 ausgebildeten Ringraum 89 des Haltekopfs 15 aufgenommen, wobei zur axialen Festsetzung der Druckstifte 85 ein Antrieb 90 - im dargestellten Ausführungsbeispiel eine am Gehäuse 58 angeflanschte, pneumatisch betätigbare, doppeltwirkende Kolben-Zylinder-Anordnung - vorgesehen ist, mittels dessen ein Keil 91 durch eine Aussparung 92 in der Zylinderhülse 60 hindurch in einer Richtung quer zur Blockerachse V zwischen benachbarte Zylinderstifte 88 eingetrieben bzw. eingeschoben werden kann, was im Ergebnis zu einer kraftschlüssigen Klemmung der Druckstifte 85 führt.

Weitere Details der Blockstation 13 sind den Fig. 1, 2 und 6 bis 13 zu entnehmen. Demgemäß ist die Blockstückaufnahme 14 zur formschlüssigen Aufnahme des Blockstücks S ausgebildet - was in bekannter Weise entsprechend der Ausgestaltung des Halteabschnitts der jeweils verwendeten Blockstücke S, die ggf. sogar einen Normanschluss aufweisen können, erfolgen kann - und kann mittels eines Stellrings 93 mit Skala 94 in der Blockstation 13 um die Blockerachse V definiert verdreht werden, wozu der Stellring 93 mit einer Handhabe 95 versehen ist. Der Stellring 93 selbst ist gemäß insbesondere Fig. 6 verdrehbar in einem Gleitring 96 aufgenommen und an diesem mittels eines Halterings 97 gehalten, wobei der Gleitring 96 in einer zugeordneten Öffnung 98 in der Basis 23 befestigt ist. Die eigentliche Aufnahme für das Blockstück S bildet ein transparentes Aufnahmestück 99, welches im Stellring 93 befestigt ist. Der Gleitring 96, der Stellring 93 und das Aufnahmestück 99 sind bezüglich der Blockerachse V zentriert.

Nachdem die Blockstückaufnahme 14 im dargestellten Ausführungsbeispiel vollständig transparent ausgebildet ist, kann das Blockmaterial M auf dem Blockstück S zum Aushärten durch ein ebenfalls transparentes Blockstück S, wie es z.B. im "Nucleo"-Prozess der Satisloh Gruppe zum Einsatz kommt, hindurch mittels einer unterhalb der Blockstückaufnahme 14 auf der Blockerachse V angeordneten Belichtungseinrichtung 100 geeignet belichtet werden.

In insbesondere Fig. 6 ist ebenfalls eine Dosiereinrichtung 101 dargestellt, mittels der das Blockmaterial M in einem verformbaren, d.h. hier zähflüssigen Zustand auf das in der Blockstückaufnahme 14 aufgenommene Blockstück S in definierter Menge aufgebracht werden kann, wobei die Dosiereinrichtung 101 mechanisch mit dem Stationsschlitten 30 verbunden ist, so dass sie zusammen mit der Ausrichtstation 11 bewegbar ist. Die Dosiereinrichtung 101 umfasst hierbei in für UV-Klebstoffe bekannter Weise ein Dosierventil 102 mit einer Winkeldüse 103, welches den eigentlichen Dosierkopf ausbildet, sowie einen Mengenmesser 104, um die abgegebene Blockmaterialmenge zu bestimmen. Die Abgabegeschwindigkeit des Blockmaterials M kann hierbei über eine Rändelschraube 105 am Dosierventil 102 eingestellt werden. Die mit der Dosiereinrichtung 101 verbundene Pumpe für die Zufuhr des Blockmaterials M ist in den Figuren nicht gezeigt. Wie in Fig. 6 zu sehen ist, ist die Winkeldüse 103 in der Arbeitsposition der Ausrichtstation 11, in der sich der Stationsschlitten 30 in seiner vorderen Stellung befindet, bezüglich der Blockerachse V zur zentrierten Abgabe des Blockmaterials M ausgefluchtet.

Eine Besonderheit besteht hier noch darin, dass der Dosierkopf (102, 103) der Dosiereinrichtung 101 bei 106 beweglich an dem Stationsschlitten 30 für die Ausrichtstation 11 gelagert ist, so dass er in Richtung des in der Blockstückaufnahme 14 aufgenommenen Blockstücks S und davon weg bewegbar ist, wobei in einer dem Blockstück S nahen Position des Dosierkopfs das Blockmaterial M zugeführt und die Zufuhr des Blockmaterials M unter Wegbewegen des Dosierkopfs aus der dem Blockstück S nahen Position in eine vom Blockstück S entfernte Position beendet werden kann, was ein definiertes Abreißen des Klebstofftropfens ermöglicht. Zur Erzeugung der Kippbewegung des Dosierkopfs um das Kipplager 106 ist ein am Stationsschlitten 30 angebrachter kleiner Pneumatikzylinder 107 vorgesehen.

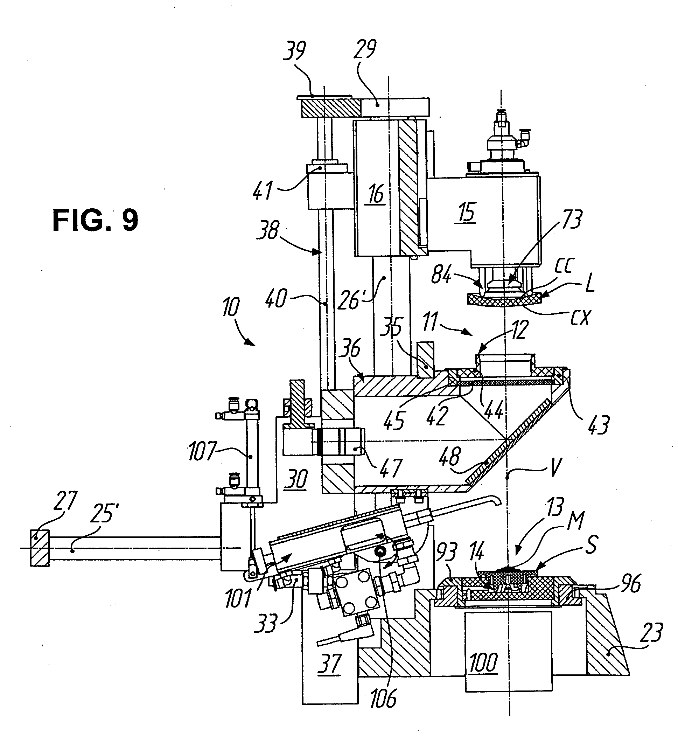

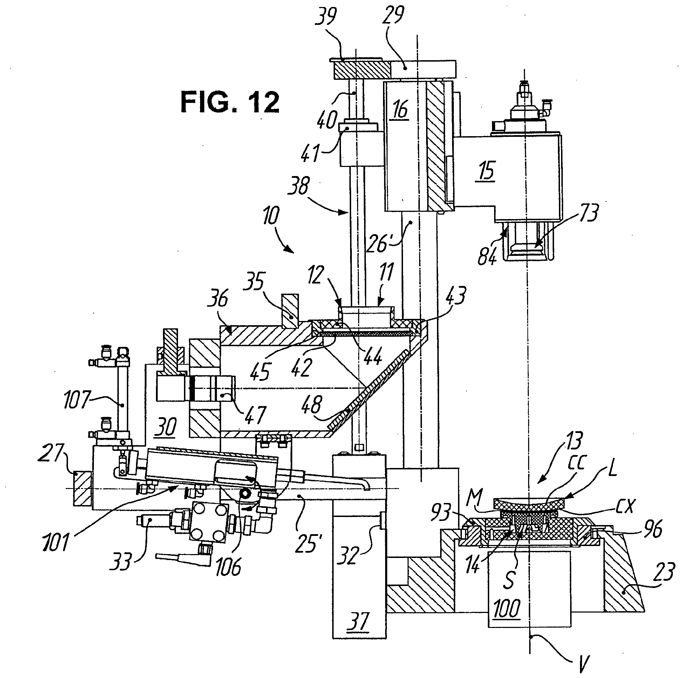

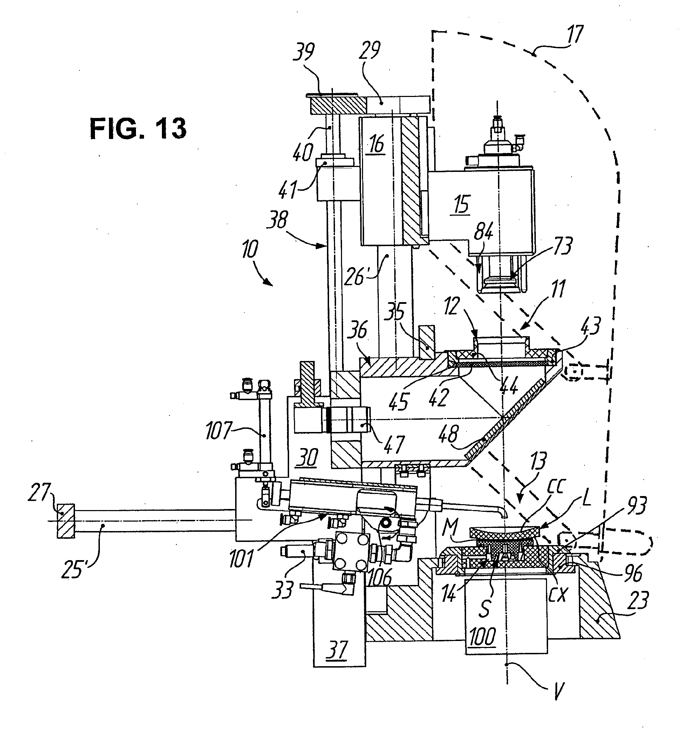

Die Fig. 6 bis 13 illustrieren den Ablauf des gesamten Blockprozesses in chronologischer Reihenfolge, wobei nach dem Ausrichten des Brillenglases L auf der Ausrichtstation 11 (Fig. 6; siehe hierzu auch die Fig. 14 bis 19 und die diesbezügliche Beschreibung) und dem Festhalten des Brillenglases L in seiner ausgerichteten Position vermittels der Niederhalteeinrichtung 68 im Haltekopf 15 (Fig. 7) die Haube 17 zur Initiierung einer automatischen Durchführung der weiteren Prozessschritte geschlossen werden kann (Fig. 8). Es erfolgt sodann das Aufbringen des Blockmaterials M auf dem Blockstück S mit der Dosiereinrichtung 101 und zugleich das Ansaugen und Gegenhalten des Brillenglases L vermittels der Saugeinrichtung 73 und der Gegenlageranordnung 84 (Fig. 8), worauf der Haltekopf 15 nach oben verfahren und die Aufbringung des Blockmaterials M unter Wegkippen der Dosiereinrichtung 101 beendet wird (Fig. 9). Sodann wird der Stationsschlitten 30 mit der Ausrichtstation 11 und der Dosiereinrichtung 101 in seine Ruheposition nach hinten verfahren (Fig. 10), bevor der Haltekopf 15 mit dem daran gehaltenen Brillenglas L für den eigentlichen Blockvorgang ("spatial blocking") definiert nach unten verfährt und das Brillenglas L über dem Blockstück S positioniert hält (Fig. 11), während das Blockmaterial M mittels der Belichtungseinrichtung 100 ausgehärtet wird. Hierauf gibt der Haltekopf 15 das geblockte Brillenglas L wieder frei und fährt auf der Blockerachse V nach oben (Fig. 12), was den Weg für den Stationsschlitten 30 mit der Ausrichtstation 11 frei macht, die folglich wieder vorgefahren werden kann (Fig. 13). Der Prozess ist nun beendet, die Haube 17 kann hochgeschwenkt werden, so dass der Bediener das geblockte Brillenglas L entnehmen kann.

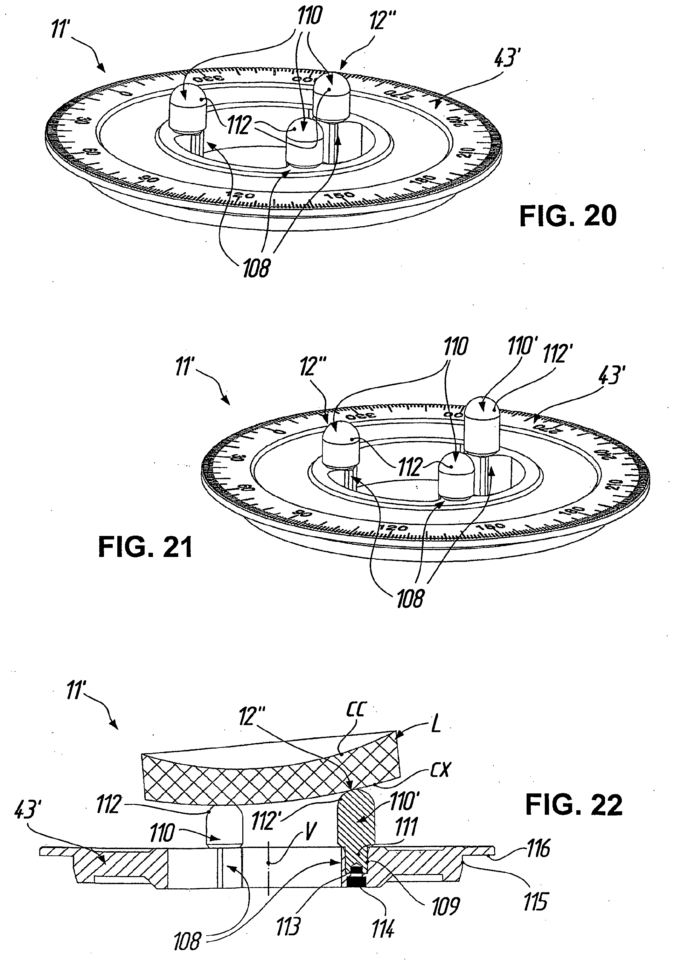

Die Fig. 20 bis 22 zeigen schließlich eine alternative Ausgestaltung der Ausrichtstation 11', die nachfolgend nur insoweit beschrieben werden soll, als sie sich von der oben unter Bezugnahme auf die Fig. 14 bis 17 beschriebenen Ausrichtstation 11 unterscheidet.

Die Ausrichtstation 11' weist einen in der gestuften Öffnung 45 des Stationsgehäuses 36 (vgl. Fig. 6) verdrehbar aufnehmbaren Skalenring 43' auf, der im Vergleich zum vorbeschriebenen Skalenring 43 nach radial innen vergrößert wurde und an seinem Innenumfang mit drei Aufnahmevorsprüngen 108 versehen ist, die um die Blockerachse V gesehen gleichmäßig voneinander winkelbeabstandet sind (120°). Jeder Aufnahmevorsprung 108 ist ausgehend von der Oberseite des Skalenrings 43' mit einer parallel zur Blockerachse V verlaufenden Aufnahmebohrung 109 versehen (siehe Fig. 22), die jeweils der Befestigung eines Auflagestifts 110 (bzw. 110') dient. Hierzu weist jeder Auflagestift 110 ein im Durchmesser verjüngtes Aufnahmeende 111 auf, das in die jeweils zugeordnete Aufnahmebohrung 109 einsteckbar ist. Am gegenüberliegenden Ende besitzt jeder Auflagestift 110 einen halbkugeligen Endabschnitt 112, wobei die halbkugeligen Endabschnitte 112 aller drei Auflagestifte 110 gemeinsam die Werkstückauflage 12" bilden, auf die das Brillenglas L auflegbar ist. Es ist ersichtlich, dass die Auflagestifte 110 (bzw. 110') somit eine definierte, kippsichere Dreipunktauflage für das Brillenglas L bilden.

Während zwei der Auflagestifte 110 z.B. mittels eines Klebstoffs in der zugeordneten Aufnahmebohrung 109 des Skalenrings 43' befestigt sind, ist der dritte Auflagestift 110 in der zugeordneten Aufnahmebohrung 109 auswechselbar gehalten, so dass er gegen einen längeren Auflagestift 110' ausgetauscht werden kann, was die Fig. 21 und 22 veranschaulichen. Wie aus Fig. 22 ersichtlich ist, kann durch geeignete Wahl der Länge des Auflagestifts 110' eine definierte Verkippung des Brillenglases L bezüglich der Blockerachse V erzielt werden. Es kann hier wiederum eine Mehrzahl von verschieden langen Auflagestiften 110' vorgehalten werden, um den gewünschten Bereich an Prismenwinkeln beim Blocken abzudecken, z.B. längenmäßig gestuft für Prismenwinkel von 0° (alle Auflagestifte 110, 110' sind gleich lang, wie in Fig. 20 gezeigt), 1°, 2°, 3°, etc.

Um den auswechselbaren Auflagestift 110' in der zugeordneten Aufnahmebohrung 109 sicher zu halten, gleichwohl einen einfachen, händischen Austausch zu ermöglichen, ist der Auflagestift 110' unten am Aufnahmeende 111 mit einem Magnet 113 versehen, der mit einem in der Aufnahmebohrung 109 befestigten Magnet 114 (oder einer dort angebrachten ferromagnetischen Einlage) zusammenwirkt.

Im am Stationsgehäuse 36 montierten Zustand des Skalenrings 43' wird dieser über die in Fig. 22 gezeigte Umfangsfläche 115 in der Öffnung 45 des Stationsgehäuses 36 zentriert, während der Skalenring 43' mit einem Ringflansch 116 oben auf dem Stationsgehäuse 36 aufliegt. Eine am Stationsgehäuse 36 angebrachte Markierung (nicht gezeigt) ermöglicht im Zusammenspiel mit den Markierungen auf der Oberseite des Skalenrings 43' eine definierte Drehwinkelorientierung des Skalenrings 43' um die Blockerachse V, so dass die gewünschte prismatische Verkippung im Raum orientiert werden kann.

In einer weiteren, nicht dargestellten Variante der Ausrichtstation kann die Ausgestaltung auch derart getroffen sein, dass zwei der drei Auflagestifte unabhängig voneinander motorisch entlang ihrer Längsachse verfahren werden können, z.B. mittels Piezoantrieben, so dass in einem (teil)automatisierten Ausrichtvorgang sowohl der Prismenwinkel als auch die Drehwinkelorientierung der Kippachse um die Blockerachse V durch geeignetes Verfahren der zwei verlagerbaren Auflagestifte einstellbar sind.

Eine Vorrichtung zum Blocken von Werkstücken umfasst eine eine Werkstückauflage aufweisende Ausrichtstation zum Ausrichten eines hierauf aufgelegten Werkstücks, eine eine Blockstückaufnahme umfassende Blockstation, in der das ausgerichtete Werkstück mittels eines Blockmaterials auf einem Blockstück aufblockbar ist, welches in der Blockstückaufnahme bezüglich einer im Wesentlichen vertikal verlaufenden Blockerachse zentriert aufnehmbar ist, und einen einen Haltekopf für das Werkstück tragenden, geeignet geführten und angetriebenen Werkstückschlitten, mittels dessen das am Haltekopf gehaltene Werkstück von der Ausrichtstation zur Blockstation transportierbar, relativ zu dem in der Blockstückaufnahme aufgenommenen Blockstück entlang der Blockerachse definiert positionierbar und während des Aufblockens in der definierten Relativlage zum Blockstück unter Belassung eines Blockmaterial-Aufnahmespalts zwischen Werkstück und Blockstück haltbar ist. Hierbei ist die Ausrichtstation von einer Ruheposition, in der sie Bewegungen des Werkstückschlittens nicht behindert, in eine Arbeitsposition bewegbar, in welcher die Werkstückauflage bezüglich der Blockerachse zentriert ist, und umgekehrt.

### BEZUGSZEICHENLISTE

- 10: Blockvorrichtung
- 11, 11': Ausrichtstation
- 12, 12', 12": Werkstückauflage
- 13: Blockstation
- 14: Blockstückaufnahme
- 15: Haltekopf
- 16: Werkstückschlitten
- 17: Haube
- 18: Elektro- und Pneumatik-Schaltschrank
- 19: Hauptschalter
- 20: Touchscreen
- 21: Ablagefläche
- 22: Grundrahmen
- 23: Basis
- 24, 24': Lagerblock
- 25, 25': Führungsstange
- 26, 26': Führungsstange
- 27: Platte
- 28: U-Profil
- 29: Platte
- 30: Stationsschlitten
- 31: Pneumatikzylinder
- 32: Anschlagfläche
- 33: Stoßdämpfer
- 34: Kolbenstange
- 35: Mitnehmer
- 36: Stationsgehäuse
- 37: Drehantrieb
- 38: Kugelgewindetrieb
- 39: Lager
- 40: Kugelrollspindel
- 41: Mutter
- 42: Schutzscheibe
- 43, 43': Skalenring
- 44, 44': Prismenring
- 45: Öffnung
- 46, 46': Markierung
- 47: Kamera
- 48: Umlenkspiegel
- 49: Zentrierhilfe
- 50: Stufe
- 51: Stufe
- 52: Punkt
- 53: Nahpunkt
- 54: Fernpunkt
- 55: Prismenreferenzpunkt
- 56: Glashorizontale
- 57: Fadenkreuz
- 58: Gehäuse
- 59: Durchgangsbohrung
- 60: Zylinderhülse
- 61: Lagerhülse
- 62: Kugelbuchse
- 63: Saugerschaft
- 64: Kolben-Zylinder-Anordnung
- 65: Klemmflansch
- 66: Stufe
- 67: Ringspalt
- 68: Niederhalteeinrichtung
- 69: Druckfeder
- 70: Druckanschluss
- 71: Kolbenstange
- 72: Druckstück
- 73: Saugeinrichtung
- 74: Saugerlippe
- 75: Kalotte
- 76: Kalottenaufnahme
- 77: Kalottenhalter
- 78: Dichtring
- 79: Druckanschluss
- 80: Flanschteil
- 81: O-Ring
- 82: O-Ring
- 83: Druckanschluss
- 84: Gegenlageranordnung
- 85: Druckstift
- 86: Bohrung
- 87: Ende
- 88: Zylinderstift
- 89: Ringraum
- 90: Antrieb
- 91: Keil
- 92: Aussparung
- 93: Stellring
- 94: Skala
- 95: Handhabe
- 96: Gleitring
- 97: Haltering
- 98: Öffnung
- 99: Aufnahmestück
- 100: Belichtungseinrichtung
- 101: Dosiereinrichtung
- 102: Dosierventil
- 103: Winkeldüse
- 104: Mengenmesser
- 105: Rändelschraube
- 106: Kipplager
- 107: Pneumatikzylinder
- 108: Aufnahmevorsprung
- 109: Aufnahmebohrung
- 110, 110': Auflagestift
- 111: Aufnahmeende
- 112, 112': halbkugeliger Endabschnitt
- 113: Magnet
- 114: Magnet
- 115: Umfangsfläche
- 116: Ringflansch
- 117: Rückwand

- cc, cc': zweite optisch wirksame Fläche
- cx: erste optisch wirksame Fläche
- G: Blockmaterial-Aufnahmespalt
- Y: Verfahrachse Stationsschlitten (ungesteuert)
- Z: Linearachse Werkstückschlitten (lagegeregelt)
- L, L': Werkstück / Brillenglas
- M: Blockmaterial
- R: Rezeptkasten
- S, S': Blockstück
- V: Blockerachse

## Patentansprüche

1. Vorrichtung (10) zum Blocken von Werkstücken (L), insbesondere Brillengläsern, für deren Bearbeitung und/oder Beschichtung, mit
einer eine Werkstückauflage (12) aufweisenden Ausrichtstation (11) zum Ausrichten eines auf der Werkstückauflage (12) aufgelegten Werkstücks (L),
einer eine Blockstückaufnahme (14) umfassenden Blockstation (13), in der das ausgerichtete Werkstück (L) mittels eines temporär verformbaren Blockmaterials (M) auf einem Blockstück (S) aufblockbar ist, welches in der Blockstückaufnahme (14) bezüglich einer im Wesentlichen vertikal verlaufenden Blockerachse (V) zentriert aufnehmbar ist, und
einem einen Haltekopf (15) für das Werkstück (L) tragenden, geeignet geführten und angetriebenen Werkstückschlitten (16), mittels dessen das ausgerichtete, am Haltekopf (15) gehaltene Werkstück (L) von der Ausrichtstation (11) zur Blockstation (13) transportierbar, relativ zu dem sich in der Blockstückaufnahme (14) befindenden Blockstück (S) entlang der Blockerachse (V) definiert positionierbar und während des Aufblockens in der definierten Relativlage zum Blockstück (S) unter Belassung eines Blockmaterial-Aufnahmespalts (G) zwischen Werkstück (L) und Blockstück (S) haltbar ist,
**dadurch gekennzeichnet, dass** die Ausrichtstation (11) von einer Ruheposition, in der sie Bewegungen des Werkstückschlittens (16) nicht behindert, in eine Arbeitsposition bewegbar ist, in welcher die Werkstückauflage (12) bezüglich der Blockerachse (V) zentriert ist, und umgekehrt.

2. Vorrichtung (10) nach Anspruch 1, **dadurch gekennzeichnet, dass** die Ausrichtstation (11) an einem geeignet geführten Stationsschlitten (30) angebracht ist, der quer zur Blockerachse (V) bewegbar ist.

3. Vorrichtung (10) nach Anspruch 2, **dadurch gekennzeichnet, dass** der Stationsschlitten (30) für die Ausrichtstation (11) an im Wesentlichen horizontal verlaufenden Führungsstangen (25, 25') axial geführt und mittels eines Pneumatikzylinders (31) auf Endanschläge bewegbar ist, die die Ruhe- und Arbeitspositionen definieren.

4. Vorrichtung (10) nach einem der vorhergehenden Ansprüche, **dadurch gekennzeichnet, dass** die Werkstückauflage (12) durch einen wechselbar an der Ausrichtstation (11) gehaltenen Prismenring (44) einer Mehrzahl von verschieden abgeschrägten Prismenringen (44, 44') gebildet ist, der vermittels eines an der Ausrichtstation (11) fest angebrachten Skalenrings (43) um die Blockerachse (V) im Drehwinkel orientierbar ist.

5. Vorrichtung (10) nach einem der vorhergehenden Ansprüche, **dadurch gekennzeichnet, dass** die Blockstückaufnahme (14) zur formschlüssigen Aufnahme des Blockstücks (S) ausgebildet und mittels eines Stellrings (93) mit Skala (94) in der Blockstation (13) um die Blockerachse (V) definiert verdrehbar ist.

6. Vorrichtung (10) nach Anspruch 2 oder 3, **dadurch gekennzeichnet, dass** am Stationsschlitten (30) eine Kamera (47) montiert ist, mittels der über einen ebenfalls am Stationsschlitten (30) angebrachten Umlenkspiegel (48) das auf der Werkstückauflage (12) der Ausrichtstation (11) aufgelegte Werkstück (L) entlang der Blockerachse (V) filmbar ist, wenn sich die Ausrichtstation (11) in ihrer Arbeitsposition befindet.

7. Vorrichtung (10) nach einem der vorhergehenden Ansprüche, **dadurch gekennzeichnet, dass** zum Bewegen und Positionieren des an im Wesentlichen vertikal verlaufenden Führungsstangen (26, 26') geführten Werkstückschlittens (16) ein ortsfester Drehantrieb (37) vorgesehen ist, der mit einem Kugelgewindetrieb (38) antriebsverbunden ist, welcher eine drehbar gelagerte Kugelrollspindel (40) aufweist, die mit einer drehfest mit dem Werkstückschlitten (16) verbundenen Mutter (41) eingreift.

8. Vorrichtung (10) nach einem der vorhergehenden Ansprüche, **dadurch gekennzeichnet, dass** der Haltekopf (15) mit einer Niederhalteeinrichtung (68) für das auf der Werkstückauflage (12) der Ausrichtstation (11) aufgelegte Werkstück (L) versehen ist, wobei die Niederhalteeinrichtung (68) eine pneumatisch betätigbare Kolben-Zylinder-Anordnung (64) mit einer in Richtung des Werkstücks (L) ausfahrbaren Kolbenstange (71) aufweist, welche mit der Blockerachse (V) ausgefluchtet ist und endseitig ein Druckstück (72) zum Angriff an dem Werkstück (L) trägt.

9. Vorrichtung (10) nach einem der vorhergehenden Ansprüche, **dadurch gekennzeichnet, dass** der Haltekopf (15) eine Saugeinrichtung (73) zum Halten des ausgerichteten Werkstücks (L) vermittels Unterdruck aufweist, mit einer ringförmigen, die Blockerachse (V) umgebenden Saugerlippe (74), die mit dem auf der Werkstückauflage (12) der Ausrichtstation (11) aufgelegten Werkstück (L) in Anlage bringbar ist.

10. Vorrichtung (10) nach Anspruch 9, **dadurch gekennzeichnet, dass** die Saugerlippe (74) bezüglich der Blockerachse (V) über eine Kalottenlageranordnung verkippbar ist, die an einem Ende eines Saugerschafts (63) angebracht ist, der im Haltekopf (15) entlang der Blockerachse (V) längsverschieblich gelagert, gleichwohl in jeder axialen Relativstellung zum Haltekopf (15) festsetzbar ist.

11. Vorrichtung (10) nach einem der vorhergehenden Ansprüche, **dadurch gekennzeichnet, dass** der Haltekopf (15) eine Gegenlageranordnung (84) zum Abstützen des am Haltekopf (15) gehaltenen Werkstücks (L) in seiner ausgerichteten Lage aufweist, wobei die Gegenlageranordnung (84) wenigstens drei parallel zur Blockerachse (V) verlaufende und um diese herum verteilt angeordnete Druckstifte (85) hat, die bezüglich des Haltekopfs (15) längsverschieblich sind, um jeweils mit einem vom Haltekopf (15) vorstehenden Ende (87) mit dem Werkstück (L) in Anlage zu gelangen, und in ihrer jeweiligen axialen Relativstellung zum Haltekopf (15) festsetzbar sind.

12. Vorrichtung (10) nach Anspruch 11, **dadurch gekennzeichnet, dass** die Druckstifte (85) in paralleler Anordnung mit einer Mehrzahl von Zylinderstiften (88) in einem Ringraum (89) des Haltekopfs (15) aufgenommen sind, wobei zur axialen Festsetzung der Druckstifte (85) ein Antrieb (90) vorgesehen ist, mittels dessen ein Keil (91) in einer Richtung quer zur Blockerachse (V) zwischen benachbarte Zylinderstifte (88) einschiebbar ist.

13. Vorrichtung (10) nach einem der vorhergehenden Ansprüche, **gekennzeichnet durch** eine Dosiereinrichtung (101), mittels der das Blockmaterial (M) in einem verformbaren Zustand auf das in der Blockstückaufnahme (14) aufgenommene Blockstück (S) in definierter Menge aufbringbar ist, wobei die Dosiereinrichtung (101) zusammen mit der Ausrichtstation (11) bewegbar ist.

14. Vorrichtung (10) nach Anspruch 13, **dadurch gekennzeichnet, dass** die Dosiereinrichtung (101) einen Dosierkopf aufweist, der beweglich an dem Stationsschlitten (30) für die Ausrichtstation (11) gelagert ist, so dass er in Richtung des in der Blockstückaufnahme (14) aufgenommenen Blockstücks (S) und davon weg bewegbar ist, wobei in einer dem Blockstück (S) nahen Position des Dosierkopfs das Blockmaterial (M) zuführbar und die Zufuhr des Blockmaterials (M) unter Wegbewegen des Dosierkopfs aus der dem Blockstück (S) nahen Position in eine vom Blockstück (S) entfernte Position beendbar ist.

15. Vorrichtung (10) nach einem der vorhergehenden Ansprüche, **dadurch gekennzeichnet, dass** die Blockstückaufnahme (14) wenigstens teilweise transparent ausgebildet ist, wobei unterhalb der Blockstückaufnahme (14) eine Belichtungseinrichtung (100) auf der Blockerachse (V) angeordnet ist, mittels der das Blockmaterial (M) zum Aushärten belichtbar ist.

## Claims

1. Device (10) for blocking workpieces (L), particularly spectacle lenses, for processing and/or coating thereof, comprising
an aligning station (11), which has a workpiece support (12), for alignment of a workpiece (L) supported on the workpiece support (12),
a blocking station (13) which comprises a block piece mount (14) and in which the aligned workpiece (L) can be blocked by means of a temporarily deformable blocking material (M) on a block piece (S), which is receivable in the block piece mount (14) to be centered with respect to a substantially vertically extending blocker axis (V), and
a suitably guided and driven workpiece carriage (16) which carries a holding head (15) for the workpiece (L) and by means of which the aligned workpiece (L) held at the holding head (15) is transportable from the aligning station (11) to the blocking station (13), is positionable in defined manner along the blocker axis (V) relative to the block piece (S) disposed in the block piece mount (14) and during the blocking can be held in the defined relative position with respect to the block piece (S) while leaving a blocking material receiving gap (G) between the workpiece (L) and the block piece (S),
**characterized in that** the aligning station (11) is movable from a rest position, in which it does not obstruct movements of the workpiece carriage (16), to a work position, in which the workpiece support (12) is centered with respect to the blocker axis (V), and conversely.

2. Device (10) according to claim 1, **characterized in that** the aligning station (11) is mounted on a suitably guided station carriage (30) movable transversely to the blocker axis (V) .

3. Device (10) according to claim 2, **characterized in that** the station carriage (30) for the aligning station (11) is axially guided at substantially horizontally extending guide rods (25, 25') and is movable by means of a pneumatic cylinder (31) onto end abutments which define the rest and work positions.

4. Device (10) according to any one of the preceding claims, **characterized in that** the workpiece support (12) is formed by a prism ring (44), which is exchangeably mounted at the aligning station (11), from a plurality of differently chamfered prism rings (44, 44'), which ring can be oriented in rotational angle about the blocker axis (V) by means of a scale ring (43) fixedly mounted at the aligning station (11).

5. Device (10) according to any one of the preceding claims, **characterized in that** the block piece mount (14) is constructed for mechanically positive mounting of the block piece (S) and is capable of defined rotation about the blocker axis (V) by means of a setting ring (93) with a scale (94) in the blocking station (13).

6. Device (10) according to claim 2 or 3, **characterized in that** mounted on the station carriage (30) is a camera (47) by means of which the workpiece (L) supported on the workpiece support (12) of the aligning station (11) can be filmed along the blocker axis (V) by way of a deflecting mirror (48), which is similarly mounted on the station carriage (30), when the aligning station (11) is disposed in its work position.

7. Device (10) according to any one of the preceding claims, **characterized in that** provided for movement and positioning of the workpiece carriage (16), which is guided at substantially vertically extending guide rods (26, 26'), is a stationary rotary drive (37) drivingly connected with a ball screw drive (38) which comprises a rotatably mounted ball screw spindle (40) engaged with a nut (41) connected with the workpiece carriage (16) to be secured against relative rotation.

8. Device (10) according to any one of the preceding claims, **characterized in that** the mounting head (15) is provided with a holding-down device (68) for the workpiece (L) supported on the workpiece support (12) of the aligning station (11), wherein the holding-down device (68) comprises a pneumatically actuable piston-cylinder arrangement (64) with a piston rod (71), which is extendable in the direction of the workpiece (L) and is aligned with the blocker axis (V) and which at the end carries a pressure member (72) for engagement with the workpiece (L).

9. Device (10) according to any one of the preceding claims, **characterized in that** the holding head (15) comprises a suction device (73) for holding the aligned workpiece (L) by means of sub-atmospheric pressure, with an annular sucker lip (74) which surrounds the blocker axis (V) and which can be brought into contact with the workpiece (L) supported on the workpiece support (12) of the aligning station (11).

10. Device (10) according to claim 9, **characterized in that** the sucker lip (74) is tiltable with respect to the blocker axis (V) by way of a spherical cap bearing arrangement mounted on an end of a sucker shank (63), which is mounted in the holding head (15) to be longitudinally displaceable along the blocker axis (V) and at the same time fixable in any axial relative setting with respect to the holding head (15).

11. Device (10) according to any one of the preceding claims, **characterized in that** the holding head (15) comprises a counter-bearing arrangement (84) for supporting the workpiece (L), which is held at the holding head (15), in its aligned position, wherein the counter-bearing arrangement (84) has at least three pressure pins (85), which extend parallel to the blocker axis (V) and are arranged to be distributed around it and which are longitudinally displaceable with respect to the holding head (15) so as to each come into contact with the workpiece (L) by an end (87) protruding from the holding head (15) and are fixable in the respective axial relative setting thereof with respect to the holding head (15).

12. Device (10) according to claim 11, **characterized in that** the pressure pins (85) are mounted in parallel arrangement with a plurality of cylinder pins (88) in an annular space (89) of the holding head (15), wherein provided for axial fixing of the pressure pins (85) is a drive (90) by means of which a wedge (91) can be pushed into place between adjacent cylinder pins (88) in a direction transverse to the blocker axis (V).

13. Device (10) according to any one of the preceding claims, **characterized by** a metering device (101) by means of which the blocking material (M) can be applied in a deformable state and in defined quantity to the block piece (S) mounted in the block piece mount (14), wherein the metering device (101) is movable together with the aligning station (11).

14. Device (10) according to claim 13, **characterized in that** the metering device (101) comprises a metering head which is movably mounted on the station carriage (30) for the aligning station (11) so that it is movable in the direction of and away from the block piece (S) mounted in the block piece mount (14), wherein the blocking material (M) can be fed in a position of the metering head near the block piece (S) and the feed of the blocking material (M) can be terminated under movement of the metering head away from the position near the block piece (S) to a position remote from the block piece (S).

15. Device (10) according to any one of the preceding claims, **characterized in that** the block piece mount (14) is formed to be at least partly transparent, wherein an optical exposure device (100) by means of which the blocking material (M) can be optically exposed for hardening is arranged below the block piece mount (14) on the blocker axis (V).

## Revendications

1. Installation (10) pour l'ablocage ou le glantage de pièces d'oeuvre (L), notamment des verres de lunettes, en vue de leur usinage et/ou de leur revêtement, l'installation comprenant
un poste d'orientation (11) comprenant un support d'appui de pièce d'oeuvre (12) pour l'orientation d'une pièce d'oeuvre (L) déposée sur le support d'appui (12),
un poste de glantage (13) comprenant un récepteur de pièce de glantage (14), dans lequel la pièce d'oeuvre (L) orientée peut être bloquée par glantage au moyen d'un matériau de glantage (M) déformable temporairement, sur une pièce de glantage (S), qui peut être reçue dans le récepteur de pièce de glantage (14) de manière centrée par rapport à un axe de glantage (V) s'étendant sensiblement de manière verticale, et
un chariot porte-pièce d'oeuvre (16), qui porte une tête de maintien (15) pour la pièce d'oeuvre (L), et est guidé et entraîné de manière appropriée, et au moyen duquel la pièce d'oeuvre (L) orientée et maintenue sur la tête de maintien (15) peut être transportée du poste d'orientation (11) au poste de glantage (13), peut être positionnée de manière définie le long de l'axe de glantage (V) par rapport à la pièce de glantage (S) se trouvant dans le récepteur de pièce de glantage (14), et peut, pendant le glantage, être maintenue dans la position relative définie par rapport à la pièce de glantage (S), en conservant un interstice d'accueil de matériau de glantage (G) entre la pièce d'oeuvre (L) et la pièce de glantage (S),
**caractérisée en ce que** le poste d'orientation (11) peut être déplacé d'une position de repos, dans laquelle il n'entrave pas des mouvements du chariot porte-pièce d'oeuvre (16), à une position de travail, dans laquelle le support d'appui de pièce d'oeuvre (12) est centré par rapport à l'axe de glantage (V), et inversement.

2. Installation (10) selon la revendication 1, **caractérisée en ce que** le poste d'orientation (11) est placé sur un chariot de poste (30) guidé de manière appropriée, qui est mobile transversalement à l'axe de glantage (V).

3. Installation (10) selon la revendication 2, **caractérisée en ce que** le chariot de poste (30) pour le poste d'orientation (11) est guidé axialement sur des tiges de guidage (25, 25') s'étendant sensiblement de manière horizontale et peut être déplacé au moyen d'un vérin pneumatique (31) contre des butées de fin de course, qui définissent les positions de repos et de travail.

4. Installation (10) selon l'une des revendications précédentes, **caractérisée en ce que** le support d'appui de pièce d'oeuvre (12) est formé par un anneau de prisme (44) de plusieurs anneaux de prisme (44, 44') biseautés différemment, maintenu de manière interchangeable dans le poste d'orientation (11), et qui peut être orienté en angle de rotation autour de l'axe de glantage (V), au moyen d'une bague graduée (43) montée de manière fixe dans le poste d'orientation (11).

5. Installation (10) selon l'une des revendications précédentes, **caractérisée en ce que** le récepteur de pièce de glantage (14) est conçu pour l'accueil par complémentarité de formes de la pièce de glantage (S) et peut être tourné de manière définie autour de l'axe de glantage (V) au moyen d'une bague de réglage (93) avec graduation (94) dans le poste de glantage (13).

6. Installation (10) selon la revendication 2 ou la revendication 3, **caractérisée en ce que** sur le chariot de poste (30) est montée une caméra (47) au moyen de laquelle il est possible de filmer le long de l'axe de glantage (V), par l'intermédiaire d'un miroir de renvoi (48) également placé sur le chariot de poste (30), la pièce d'oeuvre (L) déposée sur le support d'appui de pièce d'oeuvre (12) du poste d'orientation (11), lorsque le poste d'orientation (11) se trouve dans sa position de travail.

7. Installation (10) selon l'une des revendications précédentes, **caractérisée en ce que** pour déplacer et positionner le chariot porte-pièce d'oeuvre (16) guidé sur des tiges de guidage (26, 26') s'étendant sensiblement de manière verticale, il est prévu un entraînement de rotation (37) en position fixe, qui est relié, sur le plan de l'entraînement, à une transmission à vis à billes (38), comprenant une vis à billes (40) montée rotative, qui est en prise avec un écrou (41) lié de manière fixe en rotation au chariot porte-pièce d'oeuvre (16).

8. Installation (10) selon l'une des revendications précédentes, **caractérisée en ce que** la tête de maintien (15) est dotée d'un dispositif de serrage de maintien (68) pour la pièce d'oeuvre (L) déposée sur le support d'appui de pièce d'oeuvre (12) du poste d'orientation (11), le dispositif de serrage de maintien (68) comprenant un agencement à pistoncylindre (64) actionnable par voie pneumatique et présentant une tige de piston (71), qui peut être extraite en direction de la pièce d'oeuvre (L), et qui est alignée avec l'axe de glantage (V) et porte à son extrémité, un presseur (72) destiné à venir s'appliquer sur la pièce d'oeuvre (L).

9. Installation (10) selon l'une des revendications précédentes, **caractérisée en ce que** la tête de maintien (15) comporte un dispositif d'aspiration (73) pour maintenir la pièce d'oeuvre (L) orientée, au moyen d'une dépression, et qui comporte une lèvre de ventouse (74) de forme annulaire entourant l'axe de glantage (V) et pouvant être amenée en appui contre la pièce d'oeuvre (L) déposée sur le support d'appui de pièce d'oeuvre (12) du poste d'orientation (11).

10. Installation (10) selon la revendication 9, **caractérisée en ce que** la lèvre de ventouse (74) peut pivoter par rapport à l'axe de glantage (V) par l'intermédiaire d'un agencement de palier à rotule placé à une extrémité d'un corps allongé de ventouse (63), qui est monté en coulissement longitudinal le long de l'axe de glantage (V) dans la tête de maintien (15), et peut tout aussi bien être fixé dans chaque position axiale relative par rapport à la tête de maintien (15).

11. Installation (10) selon l'une des revendications précédentes, **caractérisée en ce que** la tête de maintien (15) comporte un agencement de butée conjuguée (84) pour assurer le soutien de la pièce d'oeuvre (L) maintenue dans sa position orientée sur la tête de maintien (15), l'agencement de butée conjuguée (84) possédant au moins trois broches de poussée (85), qui s'étendent parallèlement à l'axe de glantage (V) et sont agencées de manière répartie autour de celui-ci, qui peuvent coulisser longitudinalement par rapport à la tête de maintien (15) en vue de venir s'appuyer, chacune par l'intermédiaire d'une extrémité (87) faisant saillie de la tête de maintien (15), sur la pièce d'oeuvre (L), et qui peuvent être immobilisées dans leur position axiale relative par rapport à la tête de maintien (15).

12. Installation (10) selon la revendication 11, **caractérisée en ce que** les broches de poussée (85) sont logées, selon un agencement parallèle avec une pluralité de broches cylindriques (88), dans un espace annulaire (89) de la tête de maintien (15), un dispositif d'entraînement (90) étant prévu pour l'immobilisation axiale des broches de poussée (85), ce dispositif d'entraînement permettant d'insérer à cet effet un coin (91), selon une direction transversale à l'axe de glantage (V), entre des broches cylindriques (88) voisines.

13. Installation (10) selon l'une des revendications précédentes, **caractérisée par** un dispositif de dosage (101) au moyen duquel le matériau de glantage (M) peut être appliqué dans un état déformable et selon une quantité définie, sur la pièce de glantage (S) reçue dans le récepteur de pièce de glantage (14), le dispositif de dosage (101) étant déplaçable en commun avec le poste d'orientation (11).

14. Installation (10) selon la revendication 13, **caractérisée en ce que** le dispositif de dosage (101) présente une tête de dosage, qui est montée de manière mobile sur le chariot de poste (30) pour le poste d'orientation (11), de manière à pouvoir être déplacée en direction de la pièce de glantage (S) se trouvant dans le récepteur de pièce de glantage (14) et de manière à s'en éloigner, de sorte que dans une position de la tête de dosage, proche de la pièce de glantage (S), il est possible d'amener le matériau de glantage (M), et l'amenée de matériau de glantage (M) peut être achevée en éloignant la tête de dosage de la position proche de la pièce de glantage (S) vers une position éloignée de la pièce de glantage (S).

15. Installation (10) selon l'une des revendications précédentes, **caractérisée en ce que** le récepteur de pièce de glantage (14) est réalisé au moins en partie transparent, un dispositif d'irradiation lumineuse (100) étant agencé sur l'axe de glantage (V) en-dessous du récepteur de pièce de glantage (14), en permettant d'irradier le matériau de glantage (M) pour son durcissement.
